# EUROPEAN PATENT APPLICATION

(11) **EP 4 557 869 A1**
(43) Date of publication of application: **21.05.2025**
(21) Application number: 22950670.4
(22) Date of filing: 14.07.2022
(51) Int. Cl.: H04W 74/08, H04W 48/16, H04W 16/28

(54) **METHOD AND APPARATUS FOR MULTIPLE PHYSICAL RANDOM ACCESS CHANNEL (PRACH) TRANSMISSIONS**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2022/105837
(87) International publication number: WO 2024/011549

(57) **Abstract**

The present disclosure relates to the technical field of mobile communications, and provides a method and apparatus for multi-PRACH transmission. According to the method for multi-PRACH transmission provided in embodiments of the present disclosure, a terminal device implements each PRACH transmission among multi-PRACH transmission, and determines a preamble selected and used for each PRACH transmission. A network device receives a PRACH transmission from the terminal device, the PRACH transmission being at least one PRACH transmission among the multi-PRACH transmission sent by the terminal device, the same preamble or different preambles being selected and used for different PRACH transmissions, and the preambles being from the same preamble group or different preamble groups. According to the method and apparatus for multi-PRACH transmission of the present disclosure, a solution to preamble and Group selection in multi-PRACH transmission is provided, and normal and ordered implementation of the multi-PRACH transmission is guaranteed.

## Description

### TECHNICAL FIELD

The disclosure relates to a field of mobile communication technology, in particular to a multi-physical random access channel (PRACH) transmission method and a multi-PRACH transmission apparatus.

### BACKGROUND

Wireless communications are experiencing increasing requirements for communication capabilities with ongoing development. One of bottlenecks of uplink coverage is physical random access channel (PRACH) transmission. In order to improve coverage of the PRACH transmission, the Third Generation Partnership Project (3GPP) Release 18 (R18) is preparing to develop a solution based on multi-PRACH transmission. Although R18 has proposed the possibility of the multi-PRACH transmission, how to perform the multi-PRACH transmission is still a problem to be solved.

### SUMMARY

The present disclosure provides a multi-PRACH transmission method and a multi-PRACH transmission apparatus, which provides a solution for preamble and group selection in the multi-PRACH transmission.

According to a first aspect of embodiments of the disclosure, a multi-PRACH transmission method is provided. The method is performed by a terminal device, and includes: during respective PRACH transmissions in multi-PRACH transmission, determining preambles to be selected for the respective PRACH transmissions, in which the preambles are from the same preamble group or different preamble groups.

In some embodiments of the present disclosure, the preambles to be selected for the respective PRACH transmissions in the multi-PRACH transmission are the same, and a preamble to be selected for a first PRACH transmission in one multi-PRACH transmission is selected for the respective PRACH transmissions.

In some embodiments of the present disclosure, a first preamble to be selected for a first PRACH transmission in one multi-PRACH transmission is used for first X PRACH transmissions in the one multi-PRACH transmission, and a second preamble to be selected for a (X+1)th PRACH transmission is used for respective PRACH transmissions following the (X+1)th PRACH transmission; in which the first preamble is different from the second preamble.

In some embodiments of the present disclosure, a value of X is specified by a communication protocol or a system configuration or a network device.

In some embodiments of the present disclosure, respective selected preambles are correspondingly selected for the respective PRACH transmissions in one multi-PRACH transmission.

In some embodiments of the present disclosure, determining the preambles to be selected for the respective PRACH transmissions in the multi-PRACH transmission includes: receiving first indication information sent by a network device, in which the first indication information indicates the preambles to be selected for the respective PRACH transmissions in the multi-PRACH transmission.

In some embodiments of the present disclosure, the method further includes at least one of: in response to determining that the preambles to be selected for the respective PRACH transmissions in the multi-PRACH transmission are different according to the communication protocol or the first indication information, performing the respective PRACH transmissions in the multi-PRACH transmission with different preambles being selected for the respective PRACH transmissions; or in response to determining that the preambles to be selected for the respective PRACH transmissions in the multi-PRACH transmission are not allowed to be different according to the communication protocol or the first indication information, performing the respective PRACH transmissions in the multi-PRACH transmission with the same preamble being selected for the respective PRACH transmissions.

In some embodiments of the present disclosure, during the respective PRACH transmissions in the multi-PRACH transmission, the same preamble or different preambles being selected for the respective PRACH transmissions includes at least one of: in response to one multi-PRACH transmission being transmitted on a first random access channel (RACH) occasion (RO) associated with a first synchronization signal block (SSB), a preamble to be selected for a first PRACH transmission on the first SSB being selected for the respective PRACH transmissions in the one multi-PRACH transmission on the first RO; or in response to switching the one multi-PRACH transmission from being transmitted on the first RO associated with the first SSB to being transmitted on a second RO associated with a second SSB, reselected preambles being correspondingly selected for the respective PRACH transmissions in the one multi-PRACH transmission on the second RO.

In some embodiments of the present disclosure, during the respective PRACH transmissions in the multi-PRACH transmission, different preambles being selected for the respective PRACH transmissions includes: in response to one multi-PRACH transmission being transmitted on a first RO associated with a first SSB, a first preamble to be selected for a first PRACH transmission on the first SSB being selected for first X PRACH transmissions in the one multi-PRACH transmission on the first RO, and a second preamble reselected for a (X+1)th PRACH transmission being selected for respective PRACH transmissions following the (X+1)th PRACH transmission; wherein the first preamble is different from the second preamble.

In some embodiments of the present disclosure, a value of X is specified by a communication protocol or a system configuration or a network device.

In some embodiments of the present disclosure, during the respective PRACH transmissions in the multi-PRACH transmission, different preambles being selected for the respective PRACH transmissions includes: in response to one multi-PRACH transmission being transmitted on a first RO associated with a first SSB, reselected preambles being correspondingly selected for the respective PRACH transmissions in the one multi-PRACH transmission on the first RO.

In some embodiments of the present disclosure, the method further includes: receiving second indication information sent by a network device, wherein the second indication information is configured to determine preambles to be selected for the respective PRACH transmissions in the multi-PRACH transmission transmitted on the first RO associated with the first SSB.

In some embodiments of the present disclosure, during the respective PRACH transmissions in the multi-PRACH transmission, different preambles being selected for the respective PRACH transmissions includes at least one of: in response to one multi-PRACH transmission being transmitted on a second RO at a first time domain position, the same preamble being selected for the respective PRACH transmissions in the one multi-PRACH transmission on the second RO; or in response to switching the one multi-PRACH transmission from being transmitted on the second RO at the first time domain position to being transmitted on a third RO at a second time domain position, reselected preambles being correspondingly selected for the respective PRACH transmissions in the one multi-PRACH transmission on the third RO.

In some embodiments of the present disclosure, during the respective PRACH transmissions in the multi-PRACH transmission, different preambles being selected for the respective PRACH transmissions includes: in response to one multi-PRACH transmission being transmitted on different ROs at the same time domain position, the same first preamble being selected for first X PRACH transmissions in the one multi-PRACH transmission on the different ROs, and a reselected second preamble being selected for respective PRACH transmissions following a (X+1)th PRACH transmission; wherein the first preamble is different from the second preamble.

In some embodiments of the present disclosure, during the respective PRACH transmissions in the multi-PRACH transmission, different preambles being selected for the respective PRACH transmissions includes: in response to one multi-PRACH transmission being transmitted on different ROs at the same time domain position, reselected preambles being correspondingly selected for the respective PRACH transmissions in the one multi-PRACH transmission on the different ROs.

In some embodiments of the present disclosure, during the respective PRACH transmissions in the multi-PRACH transmission, different preambles being selected for the respective PRACH transmissions includes at least one of: in response to one multi-PRACH transmission being transmitted on different ROs at a first time domain position of the same SSB, the same preamble being selected for the respective PRACH transmissions in the one multi-PRACH transmission on the different ROs; or in response to switching one multi-PRACH transmission from being transmitted on different ROs at a first time domain position of the same SSB to being transmitted on different ROs at a second time domain position of the same SSB, reselected preambles being selected correspondingly for the respective PRACH transmissions in the one multi-PRACH transmission on the different ROs at the second time domain position.

In some embodiments of the present disclosure, the method further includes: receiving third indication information sent by a network device, wherein the third indication information indicates whether preambles to be selected for respective PRACH transmissions at one time domain position in the multi-PRACH transmission is allowed to be different.

In some embodiments of the present disclosure, the method further includes: during the respective PRACH transmissions in one multi-PRACH transmission, selecting a first-time preamble to be selected for the respective PRACH transmissions, from a preamble Group A and/or a preamble Group B.

In some embodiments of the present disclosure, selecting the first-time preamble to be selected for the respective PRACH transmissions, from the preamble Group A and/or the preamble Group B includes:
in response to an RACH configuration of the multi-PRACH transmission including a configuration of the Group A only, selecting the first-time preamble from the Group A;
in response to the RACH configuration of the multi-PRACH transmission including a configuration of the Group B only, selecting the first-time preamble from the Group B;
in response to the RACH configuration of the multi-PRACH transmission including configurations of both the Group A and the Group B, selecting the first-time preamble from the Group A and the Group B;
in response to the RACH configuration of the multi-PRACH transmission including the configurations of both the Group A and the Group B, determining whether a size of msg3 meets a threshold ra-Msg3SizeGroupA, and selecting the first-time preamble from the Group A in case of the size of msg3 meeting the threshold, selecting the first-time preamble from the Group B in case of the size of msg3 not meeting the threshold;
in response to the RACH configuration of the multi-PRACH transmission sharing an RO with other RACH configurations, selecting the first-time preamble from the Group A; or
in response to the RACH configuration of the multi-PRACH transmission sharing the RO with other RACH configurations, and the other RACH configurations including the configuration of the Group B, determining to select the first-time preamble from the Group B or the Group A according to fourth indication information sent by a network device, in which the fourth indication information indicates whether the terminal device selects the first-time preamble from the Group B.

In some embodiments of the present disclosure, the method further includes: in response to the RACH configuration of the multi-PRACH transmission and the other RACH configurations adopting separate random access channel occasions (separate ROs), receiving the RACH configuration of the multi-PRACH transmission sent by a network device, in which the RACH configuration of the multi-PRACH transmission includes a configuration of the Group B.

In some embodiments of the present disclosure, the method further includes: obtaining a reselected preamble by reselecting a preamble after selection of the first-time preamble, in which the reselected preamble is selected from a group where the first-time preamble is, or from a group other than the group where the first-time preamble is.

In some embodiments of the present disclosure, the method further includes: receive fifth indication information sent by a network device, in which the fifth indication information is used to determine whether reselection of preamble requires the same group as the selection of the first-time preamble.

In some embodiments of the present disclosure, the method further includes: in response to determining according to the fifth indication information that the reselection of preamble requires the same group as the selection of the first-time preamble, performing the reselection of preamble according to a rule for selecting the group for the first-time preamble.

In some embodiments of the present disclosure, the method further includes: in response to an RACH configuration of the multi-PRACH transmission and other RACH configurations adopting separate ROs, receiving the RACH configuration of the multi-PRACH transmission sent by a network device, in which the RACH configuration of the multi-PRACH transmission includes a configuration of the Group B.

In some embodiments of the present disclosure, the method further includes: in response to an RACH configuration of the multi-PRACH transmission sharing an RO with other RACH configurations, receiving the RACH configuration of the multi-PRACH transmission sent by the network device, in which the RACH configuration of the multi-PRACH transmission includes a dedicated configuration of the Group B.

In some embodiments of the present disclosure, a dedicated RACH configuration of the multi-PRACH transmission includes one or more of: ra-Msg3SizeGroupA, messagePowerOffsetGroupB, or numberOfRA-PreamblesGroupA.

In some embodiments of the present disclosure, the method further includes: in response to the RACH configuration of the multi-PRACH transmission not including dedicated ra-Msg3SizeGroupA, messagePowerOffsetGroupB, or numberOfRA-PreamblesGroupA, receiving the RACH configuration of the multi-PRACH transmission sent by the network device, in which the RACH configuration of the multi-PRACH transmission is a corresponding configuration in an RACH configuration sharing the RO.

In some embodiments of the present disclosure, the method further includes: the dedicated configuration of the Group B is a 4-step RA configuration or a 2-step RA configuration.

According to a second aspect of embodiments of the disclosure, a multi-PRACH transmission method is provided. The method is performed by a network device, and includes:

receiving a random access PRACH transmission from a terminal device, in which the PRACH transmission is at least one PRACH transmission in the multi-PRACH transmission sent by the terminal device; in which the multi-PRACH transmission includes a plurality of PRACH transmissions, and preambles to be selected for respective PRACH transmissions are the same or different, the preambles are from the same preamble group or different preamble groups.

In some embodiments of the present disclosure, the method further includes: in response to determining that the terminal device performing the respective PRACH transmissions in the multi-PRACH transmission, sending first indication information to the terminal device, wherein the first indication information indicates the preambles for the respective PRACH transmissions in the multi-PRACH transmission.

In some embodiments of the present disclosure, the method further includes: in response to respective PRACH transmissions in the multi-PRACH transmission transmitted on a first RO associated with a first SSB, sending second indication information to the terminal device, wherein the second indication information indicates that preambles to be selected for the respective PRACH transmissions in the multi-PRACH transmission transmitted on the first RO associated with the first SSB are allowed to be different.

In some embodiments of the present disclosure, the method further includes: in response to respective PRACH transmissions at one time domain position in the multi-PRACH transmission, sending third indication information to the terminal device, wherein the third indication information indicates whether preambles to be selected for the respective PRACH transmissions at one time domain position in the multi-PRACH transmission is allowed to be different.

In some embodiments of the present disclosure, the method further includes: in response to an RACH configuration of the multi-PRACH transmission sharing an RO with other RACH configurations, and the other RACH configurations comprising a configuration of a Group B, sending fourth indication information to the terminal device, wherein the fourth indication information indicates whether the terminal device selects a first-time preamble from the Group B.

In some embodiments of the present disclosure, the method further includes: sending fifth indication information to the terminal device, in which the fifth indication information indicate whether reselection of preamble requires the same preamble group as selection of a first-time preamble.

In some embodiments of the present disclosure, the method further includes: in response to an RACH configuration of the multi-PRACH transmission and other RACH configurations adopting separate ROs, sending the RACH configuration of the multi-PRACH transmission to the terminal device, in which the RACH configuration of the multi-PRACH transmission includes a configuration of a Group B.

In some embodiments of the present disclosure, the RACH configuration of the multi-PRACH transmission includes one or more of: ra-Msg3 SizeGroupA, messagePowerOffsetGroupB, or numberOfRA-PreamblesGroupA.

In some embodiments of the present disclosure, the method further includes: in response to an RACH configuration of the multi-PRACH transmission sharing an RO with other RACH configurations, sending the RACH configuration of the multi-PRACH transmission to the terminal device, in which the RACH configuration of the multi-PRACH transmission includes a dedicated configuration of a Group B.

In some embodiments of the present disclosure, the dedicated RACH configuration of the multi-PRACH transmission includes one or more of: ra-Msg3SizeGroupA, messagePowerOffsetGroupB, or numberOfRA-PreamblesGroupA.

In some embodiments of the present disclosure, the method further includes: in response to the RACH configuration of the multi-PRACH transmission not including the dedicated ra-Msg3SizeGroupA, messagePowerOffsetGroupB, or numberOfRA-PreamblesGroupA, sending the RACH configuration of the multi-PRACH transmission to the terminal device, in which the RACH configuration of the multi-PRACH transmission is a corresponding configuration in an RACH configuration sharing the RO.

In some embodiments of the present disclosure, the configuration of Group B is a 4-step RA configuration or a 2-step RA configuration.

According to a third aspect of embodiments of the disclosure, a multi-PRACH transmission apparatus is provided. The apparatus is applied to a terminal device, and includes: a transmission unit, configured to, during respective PRACH transmissions in multi-PRACH transmission, determine preambles to be selected for the respective PRACH transmissions, in which the preambles are from the same preamble group or different preamble groups.

According to a fourth aspect of embodiments of the disclosure, a multi-PRACH transmission apparatus is provided. The apparatus is applied to a network device, and includes: a receiving unit, configured to receive a random access PRACH transmission from a terminal device, in which the PRACH transmission is at least one PRACH transmission in the multi-PRACH transmission sent by the terminal device; in which the multi-PRACH transmission includes a plurality of PRACH transmissions, and preambles to be selected for respective PRACH transmissions are the same or different, the preambles are from the same preamble Group or different preamble Groups.

According to a fifth aspect of embodiments of the disclosure, a communication device is provided and includes: a transceiver; a memory; and a processor, respectively connected to the transceiver and the memory, in which the processor is configured to control wireless signals transceiving of the transceiver by executing computer-executable instructions on the memory, and is capable of implementing the method described in the first aspect of embodiments of the disclosure or the method described in the second aspect of embodiments of the disclosure.

According to a sixth aspect of embodiments of the disclosure, a computer storage medium is provided. The computer storage medium stores computer-executable instructions, in which, after the computer-executable instructions are executed by a processor, the method described in the first aspect of embodiments of the disclosure or the method described in the second aspect of embodiments of the disclosure is implemented.

In the multi-PRACH transmission method and the multi-PRACH transmission apparatus, during the respective PRACH transmissions in the multi-PRACH transmission, the preambles to be selected for the respective PRACH transmissions may be the same or different, and the preambles may be from the same preamble group or different preamble groups, which provides a solution for preamble and group selection in the multi-PRACH transmission, ensures a normal and orderly transmission of the multi-PRACH transmission.

Additional aspects and advantages of the disclosure will be set forth in part in the following description, and in part will be obvious from the following description, or may be learned by practice of the present disclosure.

### BRIEF DESCRIPTION OF THE DRAWINGS

The above-mentioned and/or additional aspects and advantages of the present disclosure will be apparent and readily understood from the following description of embodiments taken in combination with the accompanying drawings, in which:
FIG. 1 is a flowchart of a multi-PRACH transmission method at a terminal device according to an embodiment of the present disclosure.
FIG. 2 is a flowchart of a multi-PRACH transmission method at a network device according to an embodiment of the present disclosure.
FIG. 3 is a flowchart of a multi-PRACH transmission method according to an embodiment of the disclosure.
FIG. 4 is a flowchart of a multi-PRACH transmission method according to an embodiment of the disclosure.
FIG. 5 is a flowchart of a multi-PRACH transmission method according to an embodiment of the disclosure.
FIG. 6 is a flowchart of a multi-PRACH transmission method according to an embodiment of the disclosure.
FIG. 7 is a flowchart of a method of a preamble configuration in a multi-PRACH transmission according to an embodiment of the disclosure.
FIG. 8 is a flowchart of a method of an RACH configuration in a multi-PRACH transmission according to an embodiment of the disclosure.
FIG. 9 is a flowchart of a method of an RACH configuration in a multi-PRACH transmission according to an embodiment of the disclosure.
FIG. 10 is a block diagram of a multi-PRACH transmission apparatus at a terminal device according to an embodiment of the disclosure.
FIG. 11 is a block diagram of a multi-PRACH transmission apparatus at a terminal device according to an embodiment of the disclosure.
FIG. 12 is a block diagram of a multi-PRACH transmission apparatus at a terminal device according to an embodiment of the disclosure.
FIG. 13 is a block diagram of a multi-PRACH transmission apparatus at a terminal device according to an embodiment of the disclosure.
FIG. 14 is a block diagram of a multi-PRACH transmission apparatus at a network device according to an embodiment of the disclosure.
FIG. 15 is a block diagram of a multi-PRACH transmission apparatus at a network device according to an embodiment of the disclosure.
FIG. 16 is a block diagram of a multi-PRACH transmission apparatus at a network device according to an embodiment of the disclosure.
FIG. 17 is a schematic diagram of a communication apparatus according to an embodiment of the disclosure.
FIG. 18 is a schematic diagram of a chip according to an embodiment of the disclosure.

### DETAILED DESCRIPTION

Reference will be made in detail to embodiments of the present disclosure. Examples of the embodiments of the present disclosure will be shown in drawings, in which the same or similar elements and the elements having same or similar functions are denoted by like reference numerals throughout the descriptions. The embodiments described herein according to drawings are illustrative and intended to explain the present disclosure, not construed to limit the present disclosure.

Wireless communications have increasing requirements for communication capabilities as its continuous development. One of bottlenecks of uplink coverage is physical random access channel (PRACH). In order to improve coverage of the PRACH channel, 3GPP R18 is preparing to develop a solution based on multi-PRACH transmission. In the related art, the random access process uses beams, in which a synchronization signal block (SSB) has a plurality of transmitting opportunities within a time domain period, and has corresponding numbers, which may respectively correspond to different beams. For a terminal equipment UE, only when a beam scanning signal of the SSB covers the UE, the UE has an opportunity to send a preamble code. For a configuration of preamble resources, in the related art, the preamble resources are divided into two groups including a Group A and a Group B. The terminal equipment UE may select the preamble from the Group A and the Group B. Currently, how to select preamble and group in the multi-PRACH transmission is to be solved.

In view of this, the present disclosure provides a multi-PRACH transmission method and a multi-PRACH transmission apparatus, which provides a solution of how to select preamble and group for the multi-PRACH transmission, and ensures a normal and orderly transmission of the multi-PRACH transmission.

One multi-PRACH transmission or the multi-PRACH transmission mentioned in embodiments of the present refers to as that a terminal performs a plurality of PRACH transmissions during one random access, that is, the one multi-PRACH transmission includes the plurality of PRACH transmissions. In an embodiment of the present disclosure, "a plurality of" refers to two or more. In a possible implementation, the terminal may initiate a plurality of PRACHs during one random access, to perform the plurality of PRACH transmissions.

A switching method and a switching apparatus provided by the disclosure may be introduced in detail below with reference to the accompanying drawings.

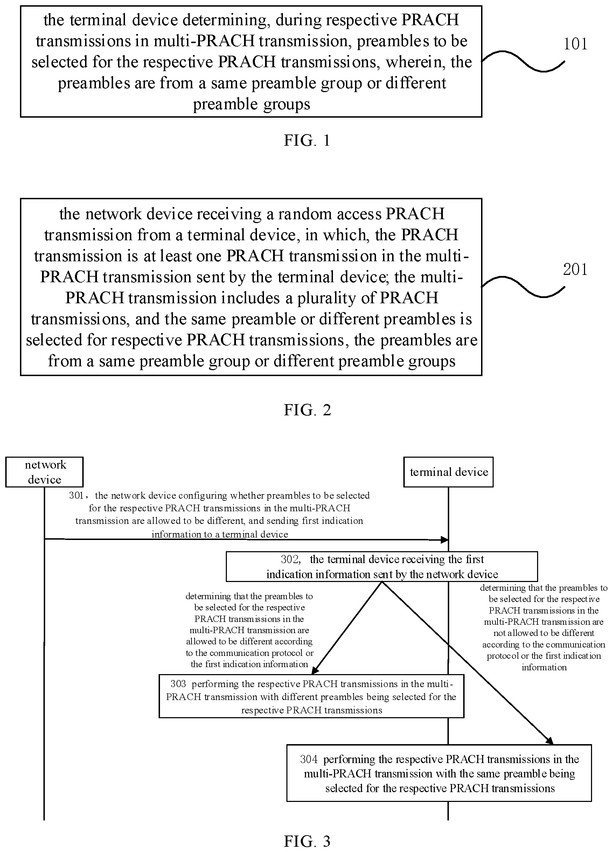

FIG. 1 is a flowchart illustrating a multi-PRACH transmission method according to an embodiment of the present disclosure. As illustrated in FIG. 1, the method is performed by a terminal device and includes a following step.

At step 101, the terminal device determines, during respective PRACH transmissions in a multi-PRACH transmission, preambles to be selected for the respective PRACH transmissions are determined. The preambles are from the same preamble group or different preamble groups.

It is noted herein that the preamble is an actual content sent by a UE in a physical random access channel. In the related art, there are 13 types of Preamble Formats for PRACHs. In addition, there are 64 preambles in one cell in LTE and NR, and the 64 preambles are divided into two parts including CB preamble (contention based preamble) and CF preamble (contention free preamble). The CB preamble may be divided into two parts including Group A and Group B. The Group B is introduced to allow a base station to learn of priori information, to allocate resources in a differentiated manner, and to improve resource utilization efficiency. One RO (random access channel occasion, RACH occasion) may support up to 64 preambles. If N SSBs are mapped to one RO, respective SSBs may only "share" 64 preambles.

In an embodiment of the present disclosure, during the respective PRACH transmissions in the multi-PRACH transmission, the terminal device selects the same preamble or different preambles for the respective PRACH transmissions. The preambles may be from the same preamble group or different preamble groups.

In addition, during the respective PRACH transmissions in the multi-PRACH transmission, whether the same preamble or different preambles can be selected for the respective PRACH transmissions may be agreed by a communication protocol or a system configuration, or may be set by a network device and sent to the terminal device. In a case of agreed by the protocol or the system, the same preamble or different preambles is selected based on the agreed protocol or system. In a case of sent by the network device, the terminal device receives a selection rule sent by the network device and selects the same preamble or different preambles accordingly. Embodiments of the present disclosure do not limit this specifically.

In an implementation of the present disclosure, it may be determined according to the communication protocol that the terminal device adopts the same preamble by default for the respective PRACH transmissions in the multi-PRACH transmission; while in response to determining that the terminal device adopts different preambles for the respective PRACH transmissions in the multi-PRACH transmission, the network device sends a first indication message to instruct the terminal device to adopt different preambles. Correspondingly, the terminal device may determine the preambles used for respective PRACH transmissions according to the communication protocol or an indication of the network device. In another embodiment of the present disclosure, it may be determined according to the communication protocol that the terminal device adopts different preambles by default for the respective PRACH transmissions in the multi-PRACH transmission; while in response to determining that the terminal device adopts the same preamble for the respective PRACH transmissions in the multi-PRACH transmission, the network device sends a first indication message to instruct the terminal device to adopt the same preamble. Correspondingly, the terminal device may determine the preambles used for respective PRACH transmissions according to the communication protocol or an indication of the network device. In another embodiment of the present disclosure, the terminal device adopts the same preamble or different preambles for the respective PRACH transmissions in the multi-PRACH transmission. It is required the network device to indicate the preambles used for the respective PRACH transmissions in the multi-PRACH transmission by the first indication message; the communication protocol does not agree a default configuration. Correspondingly, the terminal device may determine the preambles used for the respective PRACH transmissions based on the indication of the network device. In yet another embodiment of the present disclosure, a part of the respective PRACH transmissions in the multi-PRACH transmission may use the same preamble and another part of the respective PRACH transmissions in the multi-PRACH transmission may use different preambles. For the above three implementations, there are three situations at this case that: the terminal device adopts the same preamble for the respective PRACH transmissions in the multi-PRACH transmission; the terminal device adopts different preambles for the respective PRACH transmissions in the multi-PRACH transmission; or the terminal device adopts the same preamble for a part of the respective PRACH transmissions in the multi-PRACH transmission and different preambles for another part of the respective PRACH transmissions in the multi-PRACH transmission. The concept is the same as the above three implementations, which may be configured by default through the communication protocol or instructed by the network device, and may not be described again herein. It should be noted that this limitation may be applied to any implementation of embodiments of the present disclosure, and therefore will not be described again in other implementations.

In a case that it is set by the network device and sent to the terminal device, embodiments of the present disclosure also provide a multi-PRACH transmission method, as illustrated in FIG. 2. The method includes a following step.

At step 201, the network device receives a random access PRACH transmission from a terminal device, in which, the PRACH transmission is at least one PRACH transmission in the multi-PRACH transmission sent by the terminal device; the multi-PRACH transmission includes a plurality of PRACH transmissions, and the same preamble or different preambles is selected for respective PRACH transmissions, the preambles are from the same preamble group or different preamble groups.

In an embodiment of the present disclosure, the relevant description of the network device receiving the random access PRACH transmission from the terminal device may be reference to the relevant description of the existing arts, and embodiments of the present disclosure will not be described again here.

In an implementation of the present disclosure, it may be determined according to a communication protocol that the terminal device adopts the same preamble by default for the respective PRACH transmissions in the multi-PRACH transmission; while in response to determining that the terminal device adopts different preambles for the respective PRACH transmissions in the multi-PRACH transmission, a first indication message is sent to instruct the terminal device to adopt different preambles. Or, in another embodiment of the present disclosure, it may be determined according to the communication protocol that the terminal device adopts different preambles by default for the respective PRACH transmissions in the multi-PRACH transmission; while in response to determining that the terminal device adopts the same preamble for the respective PRACH transmissions in the multi-PRACH transmission, the first indication message is sent to instruct the terminal device to adopt the same preamble. Or, in another embodiment of the present disclosure, it is required to indicate whether the terminal device adopts the same preamble or different preambles for the respective PRACH transmissions in the multi-PRACH transmission by the first indication message; the communication protocol does not agree a default configuration. In yet another embodiment of the present disclosure, a part of the respective PRACH transmissions in the multi-PRACH transmission may use the same preamble and another part of the respective PRACH transmissions in the multi-PRACH transmission may use different preambles. For the above three implementations, there are three situations at this case that: the terminal device adopts the same preamble for the respective PRACH transmissions in the multi-PRACH transmission; the terminal device adopts different preambles for the respective PRACH transmissions in the multi-PRACH transmission; or the terminal device adopts the same preamble for a part of the respective PRACH transmissions in the multi-PRACH transmission and different preambles for another part of the respective PRACH transmissions in the multi-PRACH transmission. The concept is the same as the above three implementations, which may be configured by default through the communication protocol or instructed by the network device, and may not be described again herein. It should be noted that this limitation may be applied to any implementation of embodiments of the present disclosure, and therefore will not be described again in other implementations.

In the multi-PRACH transmission method and the multi-PRACH transmission apparatus, during the respective PRACH transmissions in the multi-PRACH transmission, the preambles to be selected for the respective PRACH transmissions may be the same or different, and the preambles may be from the same preamble group or different preamble groups, which provides a solution for preamble and group selection in the multi-PRACH transmission, ensures a normal and orderly transmission of the multi-PRACH transmission.

It is noted herein that, in the related art, the random access process uses beams, in which a synchronization signal block (SSB) has a plurality of transmitting opportunities within a time domain period, and has corresponding numbers, which may respectively correspond to different beams. For a terminal equipment UE, only when a beam scanning signal of the SSB covers the UE, the UE has an opportunity to send a preamble code. Upon receiving the preamble from the UE, the network device knows an optimal downlink beam, in other words, knows which beam points to the UE. Therefore, the SSB needs to have an association with the preamble, and the preamble can only be sent on a RO, thus the SSB is associated with the RO. In a time domain, one subframe (FR1) or 60KHz slot (FR2) may have a plurality of PRACH slots, and one PRACH slot may have a plurality of ROs. In a frequency domain, there may be a plurality of ROs at the same time, one cell has at most 8 (FR1) SSBs, or 64 (FR2) SSBs. The SSBs of this cell have a correspondence with the ROs. The correspondence may refer to methods in the related arts. Embodiments of the present disclosure do not limit on this specifically. Based on the correspondence between SSB and RO, embodiments of the present disclosure may, during the multi-PRACH transmission, determine a position order of respective PRACH transmissions in the multi-PRACH transmission according to a position order of the ROs, specifically, based on the RO corresponding to the same SSB, or based on the RO corresponding to the same time domain, or based on the ROs corresponding to different SSBs or different time domains. Embodiments of the present disclosure do not limit this. The following will describe respectively for different scenarios.

In some embodiments of the present disclosure, in a case that, during the respective PRACH transmissions in the multi-PRACH transmission, the same preamble or different preambles is selected for the respective PRACH transmissions, the present disclosure may adopt, but is not limited to, the following method one or method two or method three, which includes the followings.

Method one: in some embodiments of the present disclosure, in a case that the terminal device performs the respective PRACH transmissions in the multi-PRACH transmission, and the same preamble is selected for the respective PRACH transmissions, the present disclosure may adopt, but is not limited to, the following method. The method includes that:
during the respective PRACH transmissions in one multi-PRACH transmission, a preamble to be selected for a first PRACH transmission in one multi-PRACH transmission is selected for the respective PRACH transmissions. In an embodiment of the present disclosure, a method of selecting the preamble for the first PRACH transmission in the multi-PRACH transmission may refer to an existing related method, and embodiments of the present disclosure do not limit this.

Method two: in some embodiments of the present disclosure, in a case that the terminal device performs the respective PRACH transmissions in the multi-PRACH transmission, and the different preambles are selected for the respective PRACH transmissions, the present disclosure may adopt, but is not limited to, the following method. The method includes that:
a first preamble to be selected for a first PRACH transmission in one multi-PRACH transmission is used for first X PRACH transmissions in the one multi-PRACH transmission, and a second preamble to be selected for a (X+1)th PRACH transmission is used for respective PRACH transmissions following the (X+1)th PRACH transmission; in which the first preamble is different from the second preamble. That is, a part of the PRACHs uses the first preamble, and another part of the PRACHs uses the second preamble. Of course, there may be other parts of the PRACHs that use other preambles, which are not limited herein.

In an embodiment of the present disclosure, a value of X may be agreed by the system or specified by the network. In a case that the value of X is specified by the network, the value of X is configured by the network device and sent to the terminal device, and the terminal device performs the respective PRACH transmissions in the multi-PRACH transmission based on the value of X received. In a case the value of X is agreed by the system, the terminal device obtains the value of X based on the system configuration, and performs the respective PRACH transmissions in the multi-PRACH transmission based on the value of X. Which method is specifically used is not limited by embodiments of the present disclosure. Moreover, in an embodiment of the present disclosure, a method of selecting the preamble for the first PRACH transmission in the multi-PRACH transmission may refer to an existing related method, and the embodiments of the present disclosure do not limit this.

In an embodiment of the present disclosure, it should be noted that the reselected second preamble may be different from the preamble to be selected for the first PRACH transmission, or may be the same preamble as the preamble to be selected for the first PRACH transmission. Embodiments of the present disclosure are not limited to the specific method.

Method three: in some embodiments of the present disclosure, in a case that the terminal device performs the respective PRACH transmissions in the multi-PRACH transmission, and the different preambles are selected for the respective PRACH transmissions, the present disclosure may adopt, but is not limited to, the following method. The method includes that:
respective selected preambles are correspondingly selected for the respective PRACH transmissions in one multi-PRACH transmission.

In embodiments of the present disclosure, each of the respective PRACH transmissions in one multi-PRACH transmission may independently select its own preamble, and the respective selected preambles may be the same preamble or different preambles. Embodiments of the present disclosure are not limited to the specific method. In a case that the selected preambles are the same preamble, the preamble may be the first preamble to be selected for the first PRACH transmission in the multi-PRACH transmission, or may be other preambles. In a case that the selected preambles are different preambles, different preambles may be selected for the respective PRACH transmissions. Embodiments of the present disclosure are not limited to the specific method.

As mentioned above, in some embodiments of the present disclosure, whether the respective PRACH transmissions in the multi-PRACH transmission use different preambles may be set by the network device or agreed by the system. In a case of agreed by the system, the terminal device determines, based on the system, whether the preambles to be selected for the respective PRACH transmissions in the multi-PRACH transmission are allowed to be the same or different, and embodiments of the present disclosure will not be described again.

The following embodiment is aimed at a situation where the network device configures and sends whether the respective PRACH transmissions in the multi-PRACH transmission use different preambles. As illustrated in FIG. 3, the method includes following steps.

At step 301, the network device configures whether preambles to be selected for the respective PRACH transmissions in the multi-PRACH transmission are allowed to be different, and sends first indication information to a terminal device. The first indication information indicates whether the preambles to be selected for the respective PRACH transmissions in the multi-PRACH transmission are allowed to be the same or different.

At step 302, the terminal device receives the first indication information sent by the network device, in which the first indication information indicates the preambles to be selected for the respective PRACH transmissions in the multi-PRACH transmission.

The method may further include one or more of the following steps.

At step 303, in response to determining that the preambles to be selected for the respective PRACH transmissions in the multi-PRACH transmission are different according to the communication protocol or the first indication information, the respective PRACH transmissions in the multi-PRACH transmission is performed with different preambles being selected for the respective PRACH transmissions.

The specific description of the terminal device performing the respective PRACH transmissions in the multi-PRACH transmission with different preambles being selected for the respective PRACH transmissions may refer to the above corresponding description, which will not be described again here.

In an embodiment of the present disclosure, it should be noted that the preambles to be selected for the respective PRACH transmissions may be different, which may be referred to as that the preambles are completely different, or the preambles are not completely identical. Selecting completely different preambles for the respective PRACH transmissions may be referred to as that a different preamble is selected for each of the respective PRACH transmissions. Selecting not completely identical preambles for the respective PRACH transmissions may be referred to as that a part of PRACH transmissions in the respective PRACH transmissions use the same preamble and another part of PRACH transmissions use different preambles. Embodiments of the present disclosure are not limited to the specific method.

At step 304, in response to determining that the preambles to be selected for the respective PRACH transmissions in the multi-PRACH transmission are not allowed to be different according to the communication protocol or the first indication information, the respective PRACH transmissions in the multi-PRACH transmission is performed with the same preamble being selected for the respective PRACH transmissions.

The specific description of the terminal device performing the respective PRACH transmissions in the multi-PRACH transmission with the same preamble being selected for the respective PRACH transmissions may refer to the above corresponding description, which will not be described again here.

In the multi-PRACH transmission method and the multi-PRACH transmission apparatus, during the respective PRACH transmissions in the multi-PRACH transmission, whether the preambles to be selected for the respective PRACH transmissions can be the same or different may be configured and sent by the network device. The terminal may perform selection of the same preamble or different preambles for the respective PRACH transmissions according to the first indication information sent by the network device, which provides a solution for selecting the preamble in the multi-PRACH transmission, ensures a normal and orderly transmission of the multi-PRACH transmission.

In some embodiments of the present disclosure, in a case that the terminal device performs the multi-PRACH transmission on an RO associated with one SSB, the multi-PRACH transmission method may be implemented by, but is not limited to, the method of method one, method two, or method three, or a combination of the following methods. The method includes the followings.

Method one: the same preamble is selected for the respective PRACH transmissions in the multi-PRACH transmission in the RO associated with one SSB. The preambles to be selected for the PRACH transmissions respectively included in different multi-PRACH transmissions may be the same or different. However, respective PRACH transmissions included in the same multi-PRACH transmission may reselect preambles for respective PRACH transmissions of this multi-PRACH transmission. The method may specifically include, but is not limited to, the following methods including:
in response to one multi-PRACH transmission being transmitted on a first random access channel (RACH) occasion (RO) associated with a first synchronization signal block (SSB), a preamble to be selected for a first PRACH transmission on the first SSB being selected for the respective PRACH transmissions in the one multi-PRACH transmission on the first RO; or
in response to switching the one multi-PRACH transmission from being transmitted on the first RO associated with the first SSB to being transmitted on a second RO associated with a second SSB, reselected preambles being correspondingly selected for the respective PRACH transmissions in the one multi-PRACH transmission on the second RO. It should be noted that the preambles reselected for the respective PRACH transmissions are not completely identical or are completely different, and may also be the same.

Method Two: in a case that, a part of PRACH transmissions of the respective PRACH transmissions in the multi-PRACH transmission in the RO associated with one SSB selects the same preamble, and another part of the PRACH transmissions of the respective PRACH transmissions selects the same preamble. The same preamble to be selected for one part of the PRACH transmissions may be the same as or different from the same preamble to be selected for another part of the PRACH transmissions, but another part of the PRACH transmissions of the respective PRACH transmissions in the multi-PRACH transmission reselects the preambles for the PRACH transmissions. The method may specifically include, but is not limited to, the following method including:
in response to one multi-PRACH transmission being transmitted on a first RO associated with a first SSB, a first preamble to be selected for a first PRACH transmission on the first SSB being selected for first X PRACH transmissions in the one multi-PRACH transmission on the first RO, and a second preamble reselected for a (X+1)th PRACH transmission being selected for respective PRACH transmissions following the (X+1)th PRACH transmission; in which the first preamble is different from the second preamble. That is, a part of the PRACHs uses the first preamble, and another part of the PRACHs uses the second preamble. Of course, there may be other parts of the PRACHs that use other preambles, which are not limited herein.

In an embodiment of the present disclosure, the value of X may be agreed by a system or specified by a network. In a case that the value of X is agreed by the system, the terminal device obtains the value of X based on the agreed system, and performs the multi-PRACH transmission based on the value of X according to the above rule. In a case that the value of X is specified by the network, that is, the value of X is configured by the network device and sent to the terminal device, the terminal device receives the value of X sent by the network device, and performs the multi-PRACH transmission based on the value of X received according to the above rule.

Method three: one preamble is selected for each of the respective PRACH transmissions in the multi-PRACH transmission on the RO associated with one SSB. The preambles to be selected for the respective PRACH transmissions may be the same or different, but each PRACH transmission in the multi-PRACH transmission reselects the preamble for each PRACH transmission. The method may specifically include, but is not limited to, the following method including:
in response to one multi-PRACH transmission being transmitted on a first RO associated with a first SSB, reselected preambles being correspondingly selected for the respective PRACH transmissions in the one multi-PRACH transmission on the first RO, in which, the preambles reselected for the respective PRACH transmissions are not completely identical or are completely different, and may also be the same.

In some embodiments of the present disclosure, whether to allow the terminal device to select different preambles for the respective PRACH transmissions in the multi-PRACH transmission transmitted on the first RO associated with the first SSB can be set by the network device or agreed by the communication protocol, or a system configuration. In a case of agreed by the communication protocol or the system configuration, the terminal device determines whether the preambles for the respective PRACH transmissions in the multi-PRACH transmission transmitted on the first RO associated with the first SSB are allowed to be different based on the system. Embodiments of the present disclosure will not describe again.

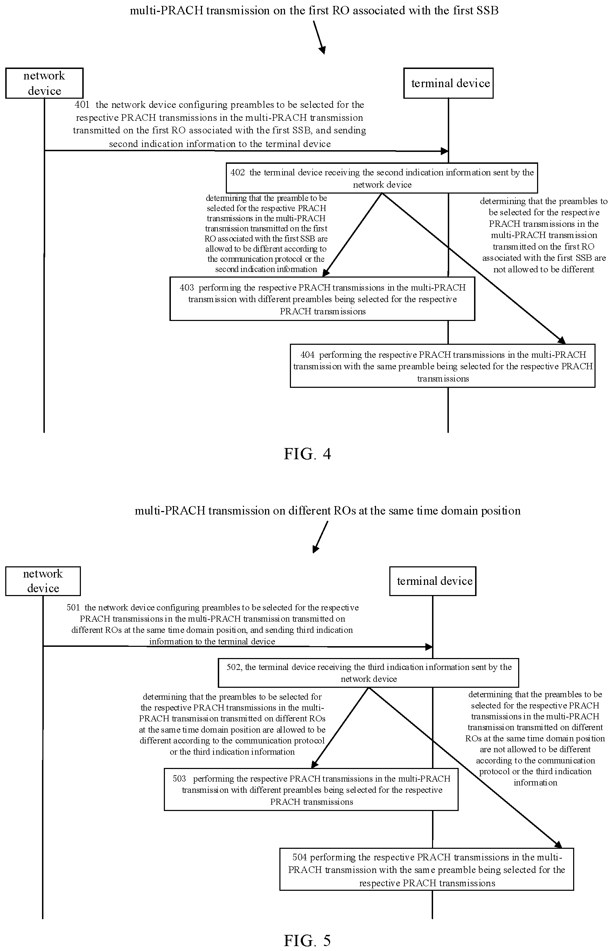

The following embodiment is aimed at a situation where the network device configures and sends whether the preambles to be selected for the respective PRACH transmissions in the multi-PRACH transmission transmitted on the first RO associated with the first SSB are allowed to be different. As illustrated in FIG. 4, the method includes following steps.

At step 401, the network device configures preambles to be selected for the respective PRACH transmissions in the multi-PRACH transmission transmitted on the first RO associated with the first SSB, and sent second indication information to the terminal device, in which the second indication information is configured to determine preambles to be selected for the respective PRACH transmissions in the multi-PRACH transmission transmitted on the first RO associated with the first SSB.

At step 402, the terminal device receives the second indication information sent by the network device.

The method may further include one or more of the following steps.

At step 403, in response to determining that the preambles to be selected for the respective PRACH transmissions in the multi-PRACH transmission transmitted on the first RO associated with the first SSB are different according to the communication protocol or the second indication information, the respective PRACH transmissions in the multi-PRACH transmission is performed with different preambles being selected for the respective PRACH transmissions.

The specific description of the terminal device performing the respective PRACH transmissions in the multi-PRACH transmission with different preambles being selected for the respective PRACH transmissions may refer to the above corresponding description, which will not be described again here.

In an embodiment of the present disclosure, it should be noted that the preambles to be selected for the respective PRACH transmissions may be different, which may be referred to as that the preambles are completely different, or the preambles are not completely identical. Selecting completely different preambles for the respective PRACH transmissions may be referred to as that a different preamble is selected for each of the respective PRACH transmissions. Selecting not completely identical preambles for the respective PRACH transmissions may be referred to as that a part of PRACH transmissions in the respective PRACH transmissions use the same preamble and another part of PRACH transmissions use different preambles. Embodiments of the present disclosure are not limited to the specific method.

At step 404, in response to determining that the preambles to be selected for the respective PRACH transmissions in the multi-PRACH transmission transmitted on the first RO associated with the first SSB are not allowed to be different according to the communication protocol or the first indication information, the respective PRACH transmissions in the multi-PRACH transmission is performed with the same preamble being selected for the respective PRACH transmissions.

The specific description of the terminal device performing the respective PRACH transmissions in the multi-PRACH transmission with the same preamble being selected for the respective PRACH transmissions may refer to the above corresponding description, which will not be described again here.

In the multi-PRACH transmission method and the multi-PRACH transmission apparatus, during the respective PRACH transmissions in the multi-PRACH transmission, whether the respective PRACH transmissions in the multi-PRACH transmission transmitted on the first RO associated with the first SSB are allowed to use the different preambles may be configured and sent by the network device. The terminal may perform selection of the same preamble or different preambles for the respective PRACH transmissions in the multi-PRACH transmission transmitted on the first RO associated with the first SSB according to the second indication information sent by the network device, which provides a solution for selecting the preamble in the multi-PRACH transmission, ensures a normal and orderly transmission of the multi-PRACH transmission.

In some embodiments of the present disclosure, in a case that the terminal device performs the multi-PRACH transmission on different ROs at the same time domain position, the multi-PRACH transmission method may be implemented by, but is not limited to, the method of method one, method two, or method three, or method four or a combination of the following methods. The method includes the followings.

Method one: the same preamble is selected for the respective PRACH transmissions in the multi-PRACH transmission on different ROs at the same time domain position. The preambles to be selected for the PRACH transmissions respectively included in different times of multi-PRACH transmissions may be the same or different. However, respective PRACH transmissions included in the each time of multi-PRACH transmission on different ROs at the same time domain position may reselect preambles for respective PRACH transmissions of this multi-PRACH transmission. The method may specifically include, but is not limited to, the following methods including:
in response to one multi-PRACH transmission being transmitted on a second RO at a first time domain position, the same preamble being selected for the respective PRACH transmissions in the one multi-PRACH transmission on the second RO; or
in response to switching the one multi-PRACH transmission from being transmitted on the second RO at the first time domain position to being transmitted on a third RO at a second time domain position, reselected preambles being selected for the respective PRACH transmissions in the one multi-PRACH transmission on the third RO. The preambles reselected for the respective PRACH transmissions are not completely identical or are completely different, and may also be the same.

Method Two: in a case that, a part of PRACH transmissions of the respective PRACH transmissions in the multi-PRACH transmission on different ROs at the same time domain position selects the same preamble, and another part of the PRACH transmissions of the respective PRACH transmissions selects the same preamble. The same preamble to be selected for one part of the PRACH transmissions may be the same as or different from the same preamble to be selected for another part of the PRACH transmissions, but another part of the PRACH transmissions of the respective PRACH transmissions in the multi-PRACH transmission reselects the preambles for the PRACH transmissions. The method may specifically include, but is not limited to, the following method including:
in response to one multi-PRACH transmission being transmitted on different ROs at the same time domain position, the same first preamble being selected for first X PRACH transmissions in the one multi-PRACH transmission on the different ROs, and a reselected second preamble being selected for respective PRACH transmissions following a (X+1)th PRACH transmission; in which, the first preamble is different from the second preamble. That is, a part of the PRACHs uses the first preamble, and another part of the PRACHs uses the second preamble. Of course, there may be other parts of the PRACHs that use other preambles, which are not limited herein.

In an embodiment of the present disclosure, the value of X may be agreed by a system or specified by a network. In a case that the value of X is agreed by the system, the terminal device obtains the value of X based on the agreed system, and performs the multi-PRACH transmission based on the value of X according to the above rule. In a case that the value of X is specified by the network, that is, the value of X is configured by the network device and sent to the terminal device, the terminal device receives the value of X sent by the network device, and performs the multi-PRACH transmission based on the value of X received according to the above rule.

Method three: one preamble is selected for each of the respective PRACH transmissions in the multi-PRACH transmission on different ROs at the same time domain position. The preambles to be selected for the respective PRACH transmissions may be the same or different, but each PRACH transmission in the multi-PRACH transmission reselects the preamble for each PRACH transmission. The method may specifically include, but is not limited to, the following method including:
in response to one multi-PRACH transmission being transmitted on different ROs at the same time domain position, reselected preambles being correspondingly selected for the respective PRACH transmissions in the one multi-PRACH transmission on the different ROs. It is noted that the preambles to be reselected for the respective PRACH transmissions are not completely identical or are completely different, and may also be the same.

Method four: in a case the respective PRACH transmissions in the multi-PRACH transmission is performed on different ROs at different time domain positions of the same SSB perform, the same preamble is selected for the respective PRACH transmissions on different ROs at each time domain position. The preambles to be selected for the respective PRACH transmissions in the multi-PRACH transmission at different time domain positions on the same SSB may be the same or different. However, respective PRACH transmissions included in the each time of multi-PRACH transmission on different ROs at the same time domain position may reselect preambles for respective PRACH transmissions of this multi-PRACH transmission. The method may specifically include, but is not limited to, the following method including:
in response to one multi-PRACH transmission being transmitted on different ROs at a first time domain position of the same SSB, the same preamble being selected for the respective PRACH transmissions in the one multi-PRACH transmission on the different ROs; or
in response to switching one multi-PRACH transmission from being transmitted on different ROs at a first time domain position of the same SSB to being transmitted on different ROs at a second time domain position of the same SSB, reselected preambles being selected correspondingly for the respective PRACH transmissions in the one multi-PRACH transmission on the different ROs at the second time domain position. It is noted that the preambles to be reselected for the respective PRACH transmissions are not completely identical or are completely different, and may also be the same.

In some embodiments of the present disclosure, whether to allow the terminal device to select different preambles for the respective PRACH transmissions in the multi-PRACH transmission on different ROs at the same time domain position may be set by the network device or agreed by the communication protocol, or a system configuration. In a case of agreed by the communication protocol or the system configuration, the terminal device determines whether the preambles to be selected for the respective PRACH transmissions in the multi-PRACH transmission transmitted on different ROs at the same time domain position are allowed to be different based on the system. Embodiments of the present disclosure will not describe again.

The following embodiment is aimed at a situation where the network device configures and sends whether the preambles to be selected for the respective PRACH transmissions in the multi-PRACH transmission transmitted on different ROs at the same time domain position are allowed to be different. As illustrated in FIG. 5, the method includes following steps.

At step 501, the network device configures preambles to be selected for the respective PRACH transmissions in the multi-PRACH transmission transmitted on different ROs at the same time domain position, and sent third indication information to the terminal device, in which the third indication information indicates whether the preambles to be selected for the respective PRACH transmissions on different ROs at the same time domain position in the multi-PRACH transmission is allowed to be different.

At step 502, the terminal device receives the third indication information sent by the network device, in which, the third indication information indicates the preambles to be selected for the respective PRACH transmissions on different ROs at the same time domain position in the multi-PRACH transmission.

The method may also include one or more of the following steps.

At step 503, in response to determining that the preambles to be selected for the respective PRACH transmissions in the multi-PRACH transmission transmitted on different ROs at the same time domain position are allowed to be different according to the communication protocol or the third indication information, the respective PRACH transmissions in the multi-PRACH transmission is performed with different preambles being selected for the respective PRACH transmissions.

The specific description of the terminal device performing the respective PRACH transmissions in the multi-PRACH transmission with different preambles being selected for the respective PRACH transmissions may refer to the above corresponding description, which will not be described again here.

In an embodiment of the present disclosure, it should be noted that the preambles to be selected for the respective PRACH transmissions may be different, which may be referred to as that the preambles are completely different, or the preambles are not completely identical. Selecting completely different preambles for the respective PRACH transmissions may be referred to as that a different preamble is selected for each of the respective PRACH transmissions. Selecting not completely identical preambles for the respective PRACH transmissions may be referred to as that a part of PRACH transmissions in the respective PRACH transmissions use the same preamble and another part of PRACH transmissions use different preambles. Embodiments of the present disclosure are not limited to the specific method.

At step 504, in response to determining that the preambles to be selected for the respective PRACH transmissions in the multi-PRACH transmission transmitted on different ROs at the same time domain position are not allowed to be different according to the communication protocol or the third indication information, the respective PRACH transmissions in the multi-PRACH transmission is performed with the same preamble being selected for the respective PRACH transmissions.

The specific description of the terminal device performing the respective PRACH transmissions in the multi-PRACH transmission with the same preamble being selected for the respective PRACH transmissions may refer to the above corresponding description, which will not be described again here.

In the multi-PRACH transmission method and the multi-PRACH transmission apparatus, during the respective PRACH transmissions in the multi-PRACH transmission, whether the preambles to be selected for the respective PRACH transmissions in the multi-PRACH transmission transmitted on different ROs at the same time domain position are allowed to be different may be configured and sent by the network device. The terminal may perform selection of the same preamble or different preambles for the respective PRACH transmissions in the multi-PRACH transmission transmitted on different ROs at the same time domain position according to the third indication information sent by the network device, which provides a solution for selecting the preamble in the multi-PRACH transmission, ensures a normal and orderly transmission of the multi-PRACH transmission.

In an embodiment, the preamble is an actual content sent by a UE in a physical random access channel. In NR, there are 13 types of Preamble Formats for PRACHs. In addition, there are 64 preambles in one cell in LTE and NR, and the 64 preambles are divided into two parts including CB preamble (contention based preamble) and CF preamble (contention free preamble). The CB preamble may be divided into two parts including Group A and Group B. The Group B is introduced to allow a base station to learn of priori information, to allocate resources in a differentiated manner, and to improve resource utilization efficiency. One RO may support up to 64 preambles. If N SSBs are mapped to one RO, respective SSBs may only "share" 64 preambles.

Therefore, during the respective PRACH transmissions in the multi-PRACH transmission, the preambles to be selected for the respective PRACH transmissions is select from any one of the following groups, including: Group A, Group B, and Group A + Group B. That is, in a case of selecting a preamble, the preamble may select from Group A, Group B, or Group A + Group B. Embodiments of the present disclosure do not limit this specifically, and a source of the preamble may be selected according to an actual situation.

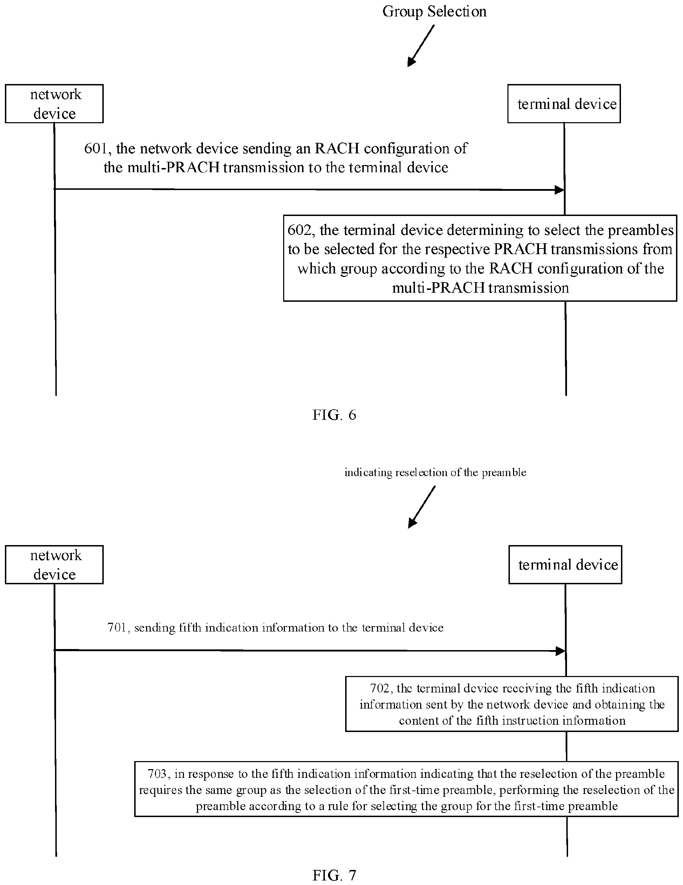

In some embodiments of the present disclosure, selecting the preambles to be selected for the respective PRACH transmissions from which group may include, but is not limited to, selecting the preambles to be selected for the respective PRACH transmissions in the multi-PRACH transmission according to the RACH configuration of the multi-PRACH transmission. As shown in FIG. 6, the multi-PRACH transmission method includes the following steps.

At step 601, the network device sends an RACH configuration of the multi-PRACH transmission to the terminal device.

At step 602, the terminal device determines to select the preambles to be selected for the respective PRACH transmissions from which group according to the RACH configuration of the multi-PRACH transmission.

As mentioned above, when selecting the preambles for the respective PRACH transmissions in the multi-PRACH transmission, it is necessary to select the first-time preamble for each PRACH transmission in the multi-PRACH transmission, and it is also necessary to select the reselected preamble. The following elaborates on selection of the first-time preamble. The specific method includes at least one of the following method one, method two, method three, method four or method five.

Method one: in a case that the RACH configuration of the multi-PRACH transmission includes the configuration of Group A only, the terminal device in response to the RACH configuration of the multi-PRACH transmission including the configuration of the Group A only, selects the first-time preamble from the Group A.

Method two: in a case that the RACH configuration of multi-PRACH transmission includes the configuration of Group B only, the terminal device in response to the RACH configuration of the multi-PRACH transmission including the configuration of the Group B only, selects the first-time preamble from the Group B.

Method three: in a case that the RACH configuration of multi-PRACH transmission includes the configuration of Group A + Group B, the terminal device in response to the RACH configuration of the multi-PRACH transmission including configuration of the Group A and + Group B, selects the first-time preamble from the Group A + Group B.

In an embodiment of the present disclosure, it should be noted that in a case of selecting the first-time preamble from the Group A+Group B, whether to select the first-time preamble from Group A or Group B may be implemented by adopting, but not limited to, the following method. The following method includes that:

the terminal device determines whether a size of msg3 meets a threshold ra-Msg3SizeGroupA, and selects the first-time preamble from the Group A in case of the size of msg3 meeting the threshold, selects the first-time preamble from the Group B in case of the size of msg3 not meeting the threshold.

Method four: in a case that the RACH configuration of multi-PRACH transmission shares an RO with other RACH configurations, the terminal device in response to the RACH configuration of the multi-PRACH transmission sharing the RO with other RACH configurations, selects the first-time preamble from the Group A.

In an embodiment of the present disclosure, it should be noted that in a case that the RACH configuration of the multi-PRACH transmission shares the RO with other RACH configurations, the terminal device selects the first-time preamble from the Group A regardless of whether other RACH configurations include the configuration of Group B.

Method five: in a case that the RACH configuration of the multi-PRACH transmission shares the RO with other RACH configurations, and the other RACH configurations include the configuration of Group B, the terminal device in response to the RACH configuration of the multi-PRACH transmission sharing the RO with other RACH configurations, and the other RACH configurations including the configuration of the Group B, determines to select the first-time preamble from the Group B or the Group A according to fourth indication information sent by the network device, in which the fourth indication information indicates whether the terminal device selects the first-time preamble from the Group B.

In an embodiment of the present disclosure, it should be noted that when the RACH configuration of the multi-PRACH transmission shares an RO with other RACH configurations, in a case that the other RACH configurations includes the configuration of Group B, the network device may send indication information to the terminal device to indicate whether to select the first-time preamble from the Group B. In a case that the fourth indication information indicates that the terminal device selects the first-time preamble from the Group B, the terminal device may select the first-time preamble from the Group B in response to the fourth indication information; in a case that the fourth indication information does not indicate the terminal device to select the first-time preamble from the Group B, the terminal device selects the first-time preamble from Group A in response to the fourth indication information. It should be noted that the above method for selecting the preamble from two Groups may be applied to any embodiment of the present disclosure, and will not be described again here.

As mentioned above, in an embodiment of the present disclosure, it should be noted that how to learn whether the RACH configuration includes the configuration of Group B may be implemented by but is not limited to the following method. The method includes that:
in response to the RACH configuration of the multi-PRACH transmission and the other RACH configurations adopting separate random access channel occasions (separate ROs), a RACH configuration of a separate RO of the multi-PRACH transmission does not includes the configuration of Group B. The terminal device obtains the RACH configuration.

The above is the relevant explanation for the first-time preamble selection by the terminal device. The following will explain the re-selection of the preamble, including:
during respective PRACH transmissions in one multi-PRACH transmission, after selecting the first-time preamble for the respective PRACH transmissions from any of the following groups, obtaining a reselected preamble by reselecting a preamble after selection of the first-time preamble in which, the reselected preamble is selected from a group where the first-time preamble is, or from a group other than the group where the first-time preamble is.

In an embodiment of the present disclosure, the group where the reselected preamble is may be the same group as the group where the first-time preamble is, or may be a different group. Whether to use the same group or different groups may be configured by the network device and sent to the terminal device. After receiving the indication sent by the network device, the terminal device reselects the preamble based on the indication. The details are shown in FIG. 7, including the following steps.

At step 701, fifth indication information is sent to the terminal device, in which the fifth indication information is used to determine whether reselection of the preamble requires the same group as the selection of the first-time preamble.

At step 702, the terminal device receives the fifth indication information sent by the network device and obtains the content of the fifth indication information.

At step 703, in response to the fifth indication information indicating that the reselection of the preamble requires the same group as the selection of the first-time preamble, the reselection of the preamble is performed according to a rule for selecting the group for the first-time preamble.

In an embodiment of the present disclosure, the specific implementation method of re-selecting the preamble may refer to the above-mentioned rule for selecting the group for the first-time preamble, which will not be described again here.

In the multi-PRACH transmission method and the multi-PRACH transmission apparatus, during the respective PRACH transmissions in the multi-PRACH transmission, the preambles to be selected for the respective PRACH transmissions may be the same or different, and the preambles may be from the same preamble group or different preamble groups, which provides a solution for preamble and group selection in the multi-PRACH transmission, ensures a normal and orderly transmission of the multi-PRACH transmission.

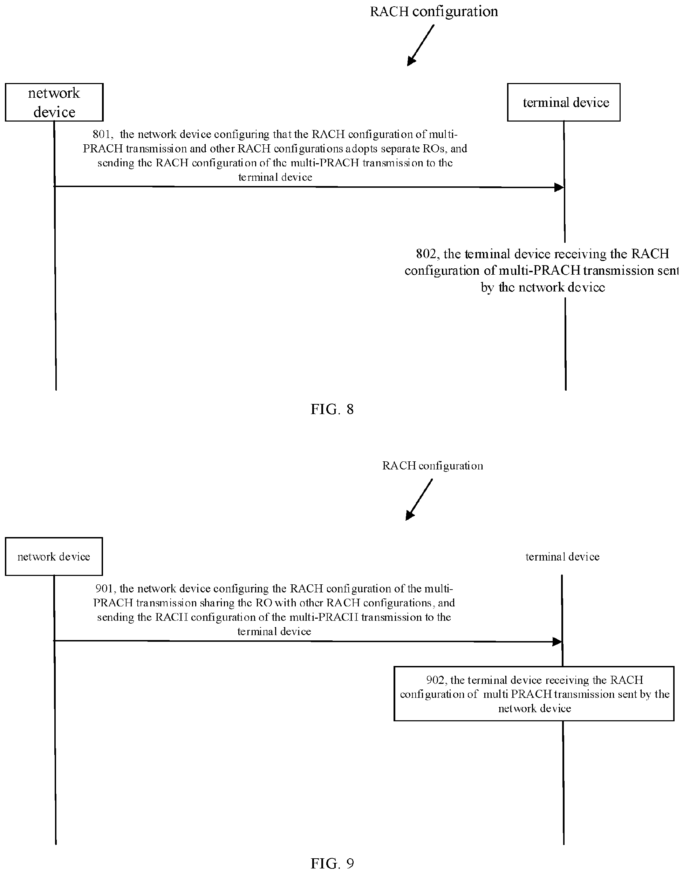

As described above in the multi-PRACH transmission method, the preambles for respective PRACH transmissions in the multi-PRACH transmission are selected for which group can be performed based on the RACH configuration sent by the network device. The RACH configuration will be described in detail below. In a case that the network device configures that an RACH configuration of the multi-PRACH transmission and other RACH configurations adopt separate ROs, as shown in FIG. 8, the method includes the following step.

At step 801, the network device configures that the RACH configuration of the multi-PRACH transmission and other RACH configurations adopt separate ROs, and sends the RACH configuration of the multi-PRACH transmission to the terminal device, in which the RACH configuration of the multi-PRACH transmission includes a configuration of the Group B.

In a case that the network device configures that the RACH configuration of the multi-PRACH transmission and other RACH configurations adopt the separate RO, the RACH configuration of the multi-PRACH transmission may include the configuration of Group B. The RACH configuration of the multi-PRACH transmission may include one or more of: ra - Msg3SizeGroupA, messagePowerOffsetGroupB, or numberOfRA-PreamblesGroupA.

In this embodiment, in a case that the network device configures that the RACH configuration of the multi-PRACH transmission and other RACH configurations adopt the separate RO, the configuration of Group B included in the RACH configuration of the multi-PRACH transmission may be a 4-step RA configuration or a 2-step RA configuration.

At step 802, the terminal device receives the RACH configuration of the multi-PRACH transmission sent by the network device, in which, the RACH configuration of multi-PRACH transmission includes the configuration of the GroupB.

As mentioned above, in a case that the network device configures that the RACH configuration of the multi-PRACH transmission and other RACH configurations adopt the separate RO, the network device sends the RACH configuration of the multi-PRACH transmission to the terminal device, and the RACH configuration of the multi-PRACH transmission includes the configuration of the GroupB. The RACH configuration of the multi-PRACH transmission includes one or more of: ra-Msg3SizeGroupA, messagePowerOffsetGroupB, or numberOfRA-PreamblesGroupA. The configuration of Group B included in the RACH configuration of the multi-PRACH transmission may be a 4-step RA configuration or a 2-step RA configuration.

In a case that the network device configures that an RACH configuration of the multi-PRACH transmission shares an RO with other RACH configurations, as shown in FIG. 9, the method includes the following steps.

At step 901, the network device configures the RACH configuration of the multi-PRACH transmission sharing the RO with other RACH configurations, and sends the RACH configuration of the multi-PRACH transmission to the terminal device, in which the RACH configuration of the multi-PRACH transmission includes a configuration of the Group B.

In a case that the network device configures the RACH configuration of multi-PRACH transmission sharing the RO with other RACH configurations, the RACH configuration of multi-PRACH transmission may include the configuration of Group B. The RACH configuration of multi-PRACH transmission may include one or more of: ra- Msg3SizeGroupA, messagePowerOffsetGroupB, or numberOfRA-PreamblesGroupA.

In this embodiment, in a case that the network device configures the RACH configuration of multi-PRACH transmission sharing the RO with other RACH configurations, the configuration of Group B included in the RACH configuration of multi-PRACH transmission may be a 4-step RA configuration or a 2-step RA configuration.

At step 902, the terminal device receives the RACH configuration of multi-PRACH transmission sent by the network device, in which the RACH configuration of the multi-PRACH transmission includes the configuration of the Group B.

As mentioned above, in a case that the network device configures the RACH configuration of multi-PRACH transmission sharing the RO with other RACH configurations, the network device sends the RACH configuration of the multi-PRACH transmission to the terminal device, and the RACH configuration of the multi-PRACH transmission includes the configuration of the Group B. The RACH configuration of the multi-PRACH transmission includes one or more of: ra-Msg3SizeGroupA, messagePowerOffsetGroupB, or numberOfRA-PreamblesGroupA. The configuration of the Group B included in the RACH configuration of the multi-PRACH transmission may be a 4-step RA configuration or a 2-step RA configuration.

In addition, in embodiments of the present disclosure, it is to be noted that in response to the RACH configuration of the multi-PRACH transmission not including dedicated ra-Msg3SizeGroupA, messagePowerOffsetGroupB, or numberOfRA-PreamblesGroupA, the RACH configuration of the multi-PRACH transmission is sent to the terminal device, in which the RACH configuration of the multi-PRACH transmission is a corresponding configuration in an RACH configuration sharing the RO. In a case that receiving the RACH configuration, the terminal device selects the preamble Group based on the RACH configuration that shares the RO.

Corresponding to the multi-PRACH transmission methods provided by the above-mentioned embodiments, the present disclosure also provides a multi-PRACH transmission apparatus, because the multi-PRACH transmission apparatus provided by the embodiments of the present disclosure is consistent with the multi-PRACH transmission methods provided by the above-mentioned embodiments. Correspondingly, the implementation of the multi-PRACH transmission method is also applicable to the multi-PRACH transmission apparatus provided in this embodiment, and will not be described in detail in this embodiment.

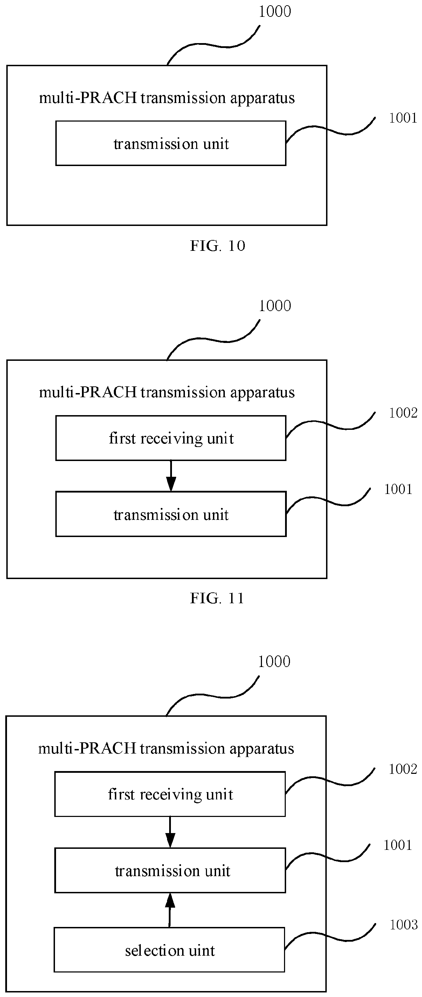

FIG. 10 is a block diagram of a multi-PRACH transmission apparatus 1000 at a terminal device according to an embodiment of the disclosure. The multi-PRACH transmission apparatus 1000 may be applied to the terminal device.

As illustrated in FIG. 10, the multi-PRACH transmission apparatus 1000 may include a transmission unit 1001.

The transmission unit 1001 is configured to, during respective PRACH transmissions in multi-PRACH transmission, determine preambles to be selected for the respective PRACH transmissions, in which the preambles are from the same preamble group or different preamble groups.

In some embodiments of the present disclosure, the transmission unit 1001 is further configured to,
perform the respective PRACH transmissions in the multi-PRACH transmission, in which a preamble to be selected for a first PRACH transmission in one multi-PRACH transmission is selected for the respective PRACH transmissions.

In some embodiments of the present disclosure, the transmission unit 1001 is further configured to, select a first preamble to be selected for a first PRACH transmission in one multi-PRACH transmission or first X PRACH transmissions in the one multi-PRACH transmission, and select a second preamble to be selected for a (X+1)th PRACH transmission for respective PRACH transmissions following the (X+1)th PRACH transmission; in which the first preamble is different from the second preamble.

In some embodiments of the present disclosure, a value of X is specified by a communication protocol or a system configuration or a network device.

In some embodiments of the present disclosure, the transmission unit 1001 is further configured to, correspondingly select respective selected preambles for the respective PRACH transmissions in one multi-PRACH transmission.

In some embodiments of the present disclosure, as shown in FIG. 11, the multi-PRACH transmission apparatus 1000 further includes: a first receiving unit 1002.

The first receiving unit 1002 is configured to receive first indication information sent by a network device, in which the first indication information indicates the preambles to be selected for the respective PRACH transmissions in the multi-PRACH transmission.

In some embodiments of the present disclosure, the transmission unit 1001 is further configured to perform at least one of:
in response to determining that the preambles to be selected for the respective PRACH transmissions in the multi-PRACH transmission are different according to the communication protocol or the first indication information, performing the respective PRACH transmissions in the multi-PRACH transmission with different preambles being selected for the respective PRACH transmissions; or
in response to determining that the preambles to be selected for the respective PRACH transmissions in the multi-PRACH transmission are not allowed to be different according to the communication protocol or the first indication information, performing the respective PRACH transmissions in the multi-PRACH transmission with the same preamble being selected for the respective PRACH transmissions.

In some embodiments of the present disclosure, the transmission unit 1001 is further configured to perform at least one of:
in response to one multi-PRACH transmission being transmitted on a first random access channel (RACH) occasion (RO) associated with a first synchronization signal block (SSB), a preamble to be selected for a first PRACH transmission on the first SSB being selected for the respective PRACH transmissions in the one multi-PRACH transmission on the first RO; or
in response to switching the one multi-PRACH transmission from being transmitted on the first RO associated with the first SSB to being transmitted on a second RO associated with a second SSB, reselected preambles being correspondingly selected for the respective PRACH transmissions in the one multi-PRACH transmission on the second RO.

In some embodiments of the present disclosure, the transmission unit 1001 is further configured to:
in response to one multi-PRACH transmission being transmitted on a first RO associated with a first SSB, select a first preamble to be selected for a first PRACH transmission on the first SSB for first X PRACH transmissions in the one multi-PRACH transmission on the first RO, and select a second preamble reselected for a (X+1)th PRACH transmission for respective PRACH transmissions following the (X+1)th PRACH transmission; in which the first preamble is different from the second preamble.

In some embodiments of the present disclosure, a value of X is specified by a communication protocol or a system configuration or a network device.

In some embodiments of the present disclosure, the transmission unit 1001 is further configured to:
in response to one multi-PRACH transmission being transmitted on a first RO associated with a first SSB, correspondingly select reselected preambles for the respective PRACH transmissions in the one multi-PRACH transmission on the first RO.

In some embodiments of the present disclosure, the first receiving unit 1002 is further configured to:
receive second indication information sent by a network device, in which the second indication information is configured to determine preambles to be selected for the respective PRACH transmissions in the multi-PRACH transmission transmitted on the first RO associated with the first SSB.

In some embodiments of the present disclosure, the transmission unit 1001 is further configured to perform at least one of:
in response to one multi-PRACH transmission being transmitted on a second RO at a first time domain position, the same preamble being selected for the respective PRACH transmissions in the one multi-PRACH transmission on the second RO; or
in response to switching the one multi-PRACH transmission from being transmitted on the second RO at the first time domain position to being transmitted on a third RO at a second time domain position, reselected preambles being correspondingly selected for the respective PRACH transmissions in the one multi-PRACH transmission on the third RO.

In some embodiments of the present disclosure, the transmission unit 1001 is further configured to:
in response to one multi-PRACH transmission being transmitted on different ROs at the same time domain position, select the same first preamble for first X PRACH transmissions in the one multi-PRACH transmission on the different ROs, and select a reselected second preamble for respective PRACH transmissions following a (X+1)th PRACH transmission; in which, the first preamble is different from the second preamble.

In some embodiments of the present disclosure, the transmission unit 1001 is further configured to:
in response to one multi-PRACH transmission being transmitted on different ROs at the same time domain position, correspondingly select reselected preambles for the respective PRACH transmissions in the one multi-PRACH transmission on the different ROs.

In some embodiments of the present disclosure, the transmission unit 1001 is further configured to perform at least one of:
in response to one multi-PRACH transmission being transmitted on different ROs at a first time domain position of the same SSB, the same preamble being selected for the respective PRACH transmissions in the one multi-PRACH transmission on the different ROs; or
in response to switching one multi-PRACH transmission from being transmitted on different ROs at a first time domain position of the same SSB to being transmitted on different ROs at a second time domain position of the same SSB, reselected preambles being selected correspondingly for the respective PRACH transmissions in the one multi-PRACH transmission on the different ROs at the second time domain position.

In some embodiments of the present disclosure, the first receiving unit 1002 is further configured to:
receive third indication information sent by a network device, in which the third indication information indicates whether preambles to be selected for respective PRACH transmissions at one time domain position in the multi-PRACH transmission is allowed to be different.

In some embodiments of the present disclosure, as shown in FIG. 12, the multi-PRACH transmission apparatus 1000 further includes: a selection unit 1003.

The selection unit 1003 is configured to, during the respective PRACH transmissions in one multi-PRACH transmission, select a first-time preamble to be selected for the respective PRACH transmissions, from a preamble Group A and/or a preamble Group B.

In some embodiments of the present disclosure, the selection unit 1003 further is configured to:

in response to an RACH configuration of the multi-PRACH transmission including a configuration of the Group A only, select the first-time preamble from the Group A.

In some embodiments of the present disclosure, the selection unit 1003 further is configured to:
in response to the RACH configuration of the multi-PRACH transmission including a configuration of the Group B only, select the first-time preamble from the Group B.

In some embodiments of the present disclosure, the selection unit 1003 further is configured to:
in response to the RACH configuration of the multi-PRACH transmission including configurations of Group A + Group B, select the first-time preamble from Group A + Group B.

In some embodiments of the present disclosure, selecting by the selection unit 1003 the first-time preamble from Group A + Group B includes:
determining whether a size of msg3 meets a threshold ra-Msg3SizeGroupA;
selecting the first-time preamble from the Group A in case of the size of msg3 meeting the threshold;
selecting the first-time preamble from the Group B in case of the size of msg3 not meeting the threshold.

In some embodiments of the present disclosure, the selection unit 1003 further is configured to: in response to the RACH configuration of the multi-PRACH transmission sharing an RO with other RACH configurations, select the first-time preamble from the Group A.

In some embodiments of the present disclosure, the selection unit 1003 further is configured to: in response to the RACH configuration of the multi-PRACH transmission sharing the RO with other RACH configurations, and the other RACH configurations including the configuration of the Group B, determine to select the first-time preamble from the Group B or the Group A according to fourth indication information sent by a network device, in which the fourth indication information indicates whether the terminal device selects the first-time preamble from the Group B.

In some embodiments of the present disclosure, the RACH configuration for multi-PRACH transmission adopts a separate RO from other RACH configurations, the RACH configuration of the separate RO of multi-PRACH transmission does not include the configuration of Group B.

In some embodiments of the present disclosure, the selection unit 1003 is further configured to, during the respective PRACH transmissions in one multi-PRACH transmission, after selecting the first-time preamble for each PRACH transmission from any of the following groups, obtain a reselected preamble by reselecting a preamble after selection of the first-time preamble. The reselected preamble is selected from a group where the first-time preamble is, or from a group other than the group where the first-time preamble is.

In some embodiments of the present disclosure, the first receiving unit 1002 is further configured to: receive fifth indication information sent by a network device, in which the fifth indication information indicates whether reselection of preamble requires the same group as the selection of the first-time preamble.

In some embodiments of the present disclosure, the selection unit 1003 is further configured: in response to the fifth indication information indicating that the reselection of preamble requires the same group as the selection of the first-time preamble, perform the reselection of preamble according to a rule for selecting the group for the first-time preamble.

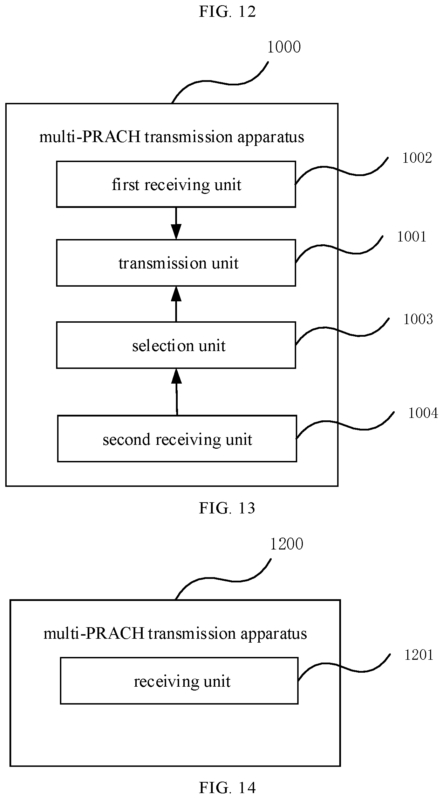

In some embodiments of the present disclosure, as shown in FIG. 13, the multi-PRACH transmission apparatus 1000 further includes: a second receiving unit 1004.

The second receiving unit 1004 is configured to, in response to an RACH configuration of the multi-PRACH transmission and other RACH configurations adopting separate ROs, receive the RACH configuration of the multi-PRACH transmission sent by a network device, in which the RACH configuration of the multi-PRACH transmission includes a configuration of the Group B.

In some embodiments of the present disclosure, the RACH configuration of the multi-PRACH transmission includes one or more of: ra-Msg3SizeGroupA, messagePowerOffsetGroupB, numberOfRA-PreamblesGroupA.

In some embodiments of the present disclosure, the configuration of Group B is a 4-step RA configuration or a 2-step RA configuration.

In some embodiments of the present disclosure, the second receiving unit 1004 is further configured to, in response to an RACH configuration of the multi-PRACH transmission sharing an RO with other RACH configurations, receive the RACH configuration of the multi-PRACH transmission sent by the network device, in which the RACH configuration of the multi-PRACH transmission includes a dedicated configuration of the Group B.

In some embodiments of the present disclosure, the dedicated RACH configuration of the multi-PRACH transmission includes one or more of:
ra-Msg3SizeGroupA, messagePowerOffsetGroupB, or numberOfRA-PreamblesGroupA.

In some embodiments of the present disclosure, the second receiving unit 1004 is further configured to, in response to the RACH configuration of the multi-PRACH transmission not including dedicated ra-Msg3SizeGroupA, messagePowerOffsetGroupB, or numberOfRA-PreamblesGroupA, receive the RACH configuration of the multi-PRACH transmission sent by the network device, in which the RACH configuration of the multi-PRACH transmission is a corresponding configuration in an RACH configuration sharing the RO.

In some embodiments of the present disclosure, the dedicated configuration of the Group B is a 4-step RA configuration or a 2-step RA configuration.

Some embodiments of the present disclosure also provide a multi-PRACH transmission apparatus. As shown in FIG. 14, the apparatus 1200 is applied to a network device, and the apparatus 1200 includes: a receiving unit 1201.

The receiving unit 1201 is configured to receive a random access PRACH transmission from a terminal device, in which the PRACH transmission is at least one PRACH transmission in the multi-PRACH transmission sent by the terminal device; in which the multi-PRACH transmission includes a plurality of PRACH transmissions, and preambles to be selected for respective PRACH transmissions are the same or different, the preambles are from the same preamble group or different preamble groups.

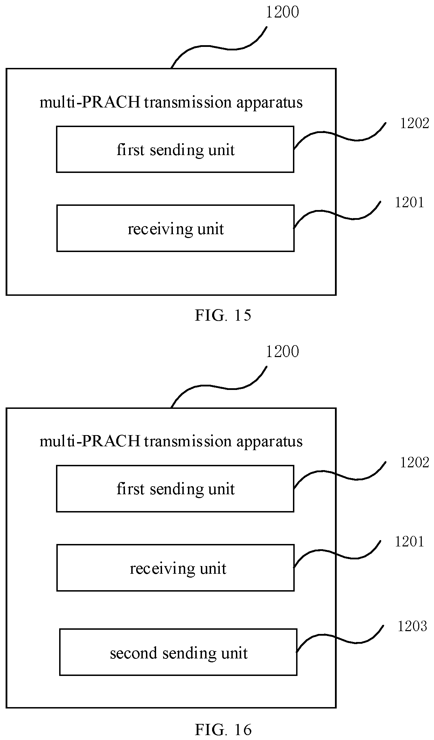

In some embodiments of the present disclosure, as shown in FIG. 15, the multi-PRACH transmission apparatus 1200 further includes: a first sending unit 1202.

The first sending unit 1202 is configured to, in response to determining that the terminal device performing the respective PRACH transmissions in the multi-PRACH transmission, send first indication information to the terminal device, in which the first indication information indicates the preambles to be selected for the respective PRACH transmissions in the multi-PRACH transmission.

In some embodiments of the present disclosure, the first sending unit 1202 is configured to, in response to respective PRACH transmissions in the multi-PRACH transmission transmitted on a first RO associated with a first SSB, send second indication information to the terminal device, in which the second indication information indicates that preambles to be selected for the respective PRACH transmissions in the multi-PRACH transmission transmitted on the first RO associated with the first SSB are allowed to be different.

In some embodiments of the present disclosure, the first sending unit 1202 is configured to, in response to respective PRACH transmissions at one time domain position in the multi-PRACH transmission, send third indication information to the terminal device, in which the third indication information indicates whether preambles to be selected for the respective PRACH transmissions at one time domain position in the multi-PRACH transmission is allowed to be different.

In some embodiments of the present disclosure, the first sending unit 1202 is configured to, in response to an RACH configuration of the multi-PRACH transmission sharing a RO with other RACH configurations, and the other RACH configurations including a configuration of a Group B, send fourth indication information to the terminal device, in which the fourth indication information indicates whether the terminal device selects a first-time preamble from the Group B.

In some embodiments of the present disclosure, the first sending unit 1202 is configured to, send fifth indication information to the terminal device, in which the fifth indication information indicate whether reselection of preamble requires the same preamble group as selection of a first-time preamble.

In some embodiments of the present disclosure, the multi-PRACH transmission apparatus, as shown in FIG. 16, further includes: a second sending unit 1203.

The second sending unit 1203 is configured to, in response to an RACH configuration of the multi-PRACH transmission and other RACH configurations adopting separate ROs, send the RACH configuration of the multi-PRACH transmission to the terminal device, in which the RACH configuration of the multi-PRACH transmission includes a configuration of a Group B.

In some embodiments of the present disclosure, the RACH configuration of the multi-PRACH transmission includes one or more of: ra-Msg3SizeGroupA, messagePowerOffsetGroupB, or numberOfRA-PreamblesGroupA.

In some embodiments of the present disclosure, the configuration of Group B is a 4-step RA configuration or a 2-step RA configuration.

In some embodiments of the present disclosure, the second sending unit 1203 is further configured to: in response to an RACH configuration of the multi-PRACH transmission sharing an RO with other RACH configurations, send the RACH configuration of the multi-PRACH transmission to the terminal device, in which the RACH configuration of the multi-PRACH transmission includes a dedicated configuration of a Group B.

In some embodiments of the present disclosure, the dedicated RACH configuration of the multi-PRACH transmission includes one or more of:
ra-Msg3SizeGroupA, messagePowerOffsetGroupB, or numberOfRA-PreamblesGroupA.

In some embodiments of the present disclosure, the second sending unit 1203 is further configured to:
in response to the RACH configuration of the multi-PRACH transmission not including the dedicated ra-Msg3SizeGroupA, messagePowerOffsetGroupB, or numberOfRA-PreamblesGroupA, send the RACH configuration of the multi-PRACH transmission to the terminal device, in which the RACH configuration of the multi-PRACH transmission is a corresponding configuration in an RACH configuration sharing the RO.

In some embodiments of the present disclosure, the configuration of Group B is a 4-step RA configuration or a 2-step RA configuration.

In the multi-PRACH transmission apparatus, during the respective PRACH transmissions in the multi-PRACH transmission, the preambles to be selected for the respective PRACH transmissions may be the same or different, and the preambles may be from the same preamble group or different preamble groups, which provides a solution for preamble and group selection in the multi-PRACH transmission, ensures a normal and orderly transmission of the multi-PRACH transmission.

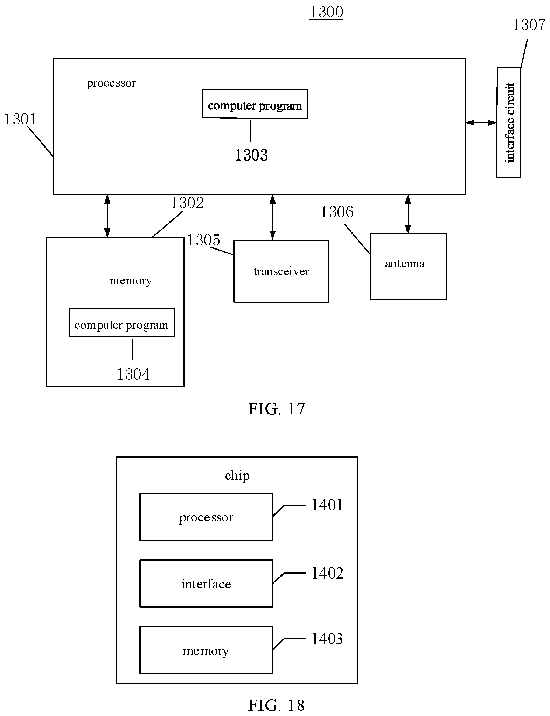

Please refer to FIG. 17, FIG. 17 is a schematic structural diagram of a communication device 1300 provided by an embodiment of the present application. The communication device 1300 may be a network device, a user equipment, a chip, a chip system, or a processor that supports the network device to implement the above method, or a chip, a chip system, or a processor that supports the user equipment to implement the above method. The device can be used to implement the method described in the above method embodiment. For details, please refer to the description in the above method embodiment.

The communication device 1300 may include one or more processors 1301. The processor 1301 may be a general purpose processor or a dedicated processor, such as, a baseband processor or a central processor. The baseband processor is used for processing communication protocols and communication data. The central processor is used for controlling the communication apparatus (e.g., base station, baseband chip, terminal device, terminal device chip, DU, or CU), executing computer programs, and processing data of the computer programs.

Optionally, the communication apparatus 1300 may include one or more memories 1302 on which computer programs 1304 may be stored. The processor 1301 executes the computer programs 1304 to cause the communication apparatus 1300 to perform the methods described in the above method embodiments. Optionally, data may also be stored in the memory 1302. The communication apparatus 1300 and the memory 1302 may be set separately or integrated together.

Optionally, the communication apparatus 1300 may also include a transceiver 1305 and an antenna 1306. The transceiver 1305 may be referred to as transceiver unit, transceiver machine, or transceiver circuit, for realizing the transceiver function. The transceiver 1305 may include a receiver and a transmitter. The receiver may be referred to as receiver machine or receiving circuit, for realizing the receiving function. The transmitter may be referred to as transmitter machine or transmitting circuit, for realizing the transmitting function.

Optionally, the communication apparatus 1300 may also include one or more interface circuits 1307. The interface circuits 1307 are used to receive code instructions and transmit them to the processor 1301. The processor 1301 runs the code instructions to cause the communication apparatus 1300 to perform the method described in the method embodiments.

In an implementation, the processor 1301 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor 1301 may store a computer program 1303, and the computer program 1303 runs on the processor 1301, causing the communication device 1300 to perform the method described in the above method embodiment. The computer program 1303 may be solidified in the processor 1301, in which case the processor 1301 may be implemented by hardware.

In one implementation, the communication device 1300 may include circuits. The circuits may implement the sending, receiving or communicating function in the preceding method embodiments. The processor and transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be a network side device or a terminal device, but the scope of the communication device described in the disclosure is not limited thereto, and the structure of the communication device may not be limited by FIG. 16. The communication device may be a stand-alone device or may be part of a larger device. For example, the described communication device may be:
(1) a stand-alone integrated circuit (IC), or chip, or chip system or subsystem;
(2) a set of ICs including one or more ICs, optionally, the set of ICs may also include storage components for storing data and computer programs;
(3) an ASIC, such as a modem;
(4) a module that can be embedded in other devices;
(5) a receiver, a terminal device, a smart terminal device, a cellular phone, a wireless device, a handheld machine, a mobile unit, an in-vehicle device, a network side device, a cloud device, an artificial intelligence device, and the like;; and
(6) others.

The case where the communication apparatus may be a chip or a chip system may be referred to the schematic structural diagram of the chip shown in FIG. 18. In FIG. 18, the chip includes a processor 1401 and an interface 1402. There may be one or more processors 1401, and there may be multiple interfaces 1402.

Optionally, the chip further includes a memory 1403 used for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer programs on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

As used herein, the terms "machine-readable medium" and "computer-readable medium" refer to as any computer program product, device, and/or apparatus (for example, a magnetic disk, an optical disk, a memory, a programmable logic device (PLD)) for providing machine instructions and/or data to a programmable processor, including a machine-readable medium that receives machine instructions as machine-readable signals. The term "machine-readable signal" refers to as any signal for providing the machine instructions and/or data to the programmable processor.

The systems and techniques described herein may be implemented in a computing system including a back-end component (e.g., as a data server), or a computing system including a middleware component (e.g., an application server), or a computing system including a front-end component (e.g., a user computer having a graphical user interface or web browser through which the user can interact with implementations of the systems and technologies described herein), or a computing system including any combination of such backend component, middleware component, or front-end component. The components of the system may be interconnected by any form or medium of digital data communication (e. g., a communications network). Examples of communication networks may include: a local area network (LAN), a wide area network (WAN), and the Internet.

The computer system may include a client and a server. The client and the server are generally remote from each other and typically interact over the communications network. The relationship of client and server is created by a computer program running on corresponding computers and having a client-server relationship with each other.

It should be understood that various forms of the process shown above may be used, with steps reordered, added or deleted. For example, each step described in the present disclosure may be executed in parallel, sequentially, or in a different order. As long as the desired results of the technical solution disclosed in the present disclosure can be achieved. The present disclosure does not limit it herein.

In addition, it should be understood that various embodiments of the present disclosure may be implemented alone or in combination with other embodiments if the solution allows.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above can be referred to the corresponding processes in the preceding method embodiments, and will not be repeated herein.

The above are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the appended claims.

The above are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the appended claims.

## Claims

1. A multi-physical random access channel (PRACH) transmission method, performed by a terminal device, comprising:
during respective PRACH transmissions in a multi-PRACH transmission, determining preambles to be selected for the respective PRACH transmissions, wherein the preambles are from a same preamble group or different preamble groups.

2. The method according to claim 1, wherein the preambles to be selected for the respective PRACH transmissions in the multi-PRACH transmission are the same, and a preamble to be selected for a first PRACH transmission in one multi-PRACH transmission is selected for the respective PRACH transmissions.

3. The method according to claim 1, wherein a first preamble to be selected for a first PRACH transmission in one multi-PRACH transmission is used for first X PRACH transmissions in the one multi-PRACH transmission, and a second preamble to be selected for a (X+1)th PRACH transmission is used for respective PRACH transmissions following the (X+1)th PRACH transmission; wherein the first preamble is different from the second preamble.

4. The method according to claim 3, wherein a value of X is specified by a communication protocol or a system configuration or a network device.

5. The method according to claim 1, wherein respective selected preambles are correspondingly selected for the respective PRACH transmissions in one multi-PRACH transmission.

6. The method according to any one of claims 1 to 5, wherein determining the preambles to be selected for the respective PRACH transmissions in the multi-PRACH transmission comprises:
receiving first indication information sent by a network device, wherein the first indication information indicates the preambles to be selected for the respective PRACH transmissions in the multi-PRACH transmission.

7. The method according to claim 6, further comprising at least one of:
in response to determining that the preambles to be selected for the respective PRACH transmissions in the multi-PRACH transmission are different according to a communication protocol or the first indication information, performing the respective PRACH transmissions in the multi-PRACH transmission with different preambles being selected for the respective PRACH transmissions; or
in response to determining that the preambles to be selected for the respective PRACH transmissions in the multi-PRACH transmission are not allowed to be different according to the communication protocol or the first indication information, performing the respective PRACH transmissions in the multi-PRACH transmission with the same preamble being selected for the respective PRACH transmissions.

8. The method according to claim 1, wherein during the respective PRACH transmissions in the multi-PRACH transmission, the same preamble or different preambles being selected for the respective PRACH transmissions comprises at least one of:
in response to one multi-PRACH transmission being transmitted on a first random access channel (RACH) occasion (RO) associated with a first synchronization signal block (SSB), a preamble to be selected for a first PRACH transmission on the first SSB being selected for the respective PRACH transmissions in the one multi-PRACH transmission on the first RO; or
in response to switching the one multi-PRACH transmission from being transmitted on the first RO associated with the first SSB to being transmitted on a second RO associated with a second SSB, reselected preambles being correspondingly selected for the respective PRACH transmissions in the one multi-PRACH transmission on the second RO.

9. The method according to claim 1, wherein during the respective PRACH transmissions in the multi-PRACH transmission, different preambles being selected for the respective PRACH transmissions comprises:
in response to one multi-PRACH transmission being transmitted on a first RO associated with a first SSB, a first preamble to be selected for a first PRACH transmission on the first SSB being selected for first X PRACH transmissions in the one multi-PRACH transmission on the first RO, and a second preamble reselected for a (X+1)th PRACH transmission being selected for respective PRACH transmissions following the (X+1)th PRACH transmission; wherein the first preamble is different from the second preamble.

10. The method according to claim 9, wherein a value of X is specified by a communication protocol or a system configuration or a network device.

11. The method according to claim 1, wherein during the respective PRACH transmissions in the multi-PRACH transmission, different preambles being selected for the respective PRACH transmissions comprises:
in response to one multi-PRACH transmission being transmitted on a first RO associated with a first SSB, reselected preambles being correspondingly selected for the respective PRACH transmissions in the one multi-PRACH transmission on the first RO.

12. The method according to any one of claims 8-11, further comprising:
receiving second indication information sent by a network device, wherein the second indication information is configured to determine preambles to be selected for the respective PRACH transmissions in the multi-PRACH transmission transmitted on the first RO associated with the first SSB.

13. The method according to claim 1, wherein during the respective PRACH transmissions in the multi-PRACH transmission, different preambles being selected for the respective PRACH transmissions comprises at least one of:
in response to one multi-PRACH transmission being transmitted on a second RO at a first time domain position, the same preamble being selected for the respective PRACH transmissions in the one multi-PRACH transmission on the second RO; or
in response to switching the one multi-PRACH transmission from being transmitted on the second RO at the first time domain position to being transmitted on a third RO at a second time domain position, reselected preambles being correspondingly selected for the respective PRACH transmissions in the one multi-PRACH transmission on the third RO.

14. The method according to claim 1, wherein during the respective PRACH transmissions in the multi-PRACH transmission, different preambles being selected for the respective PRACH transmissions comprises:
in response to one multi-PRACH transmission being transmitted on different ROs at a same time domain position, a same first preamble being selected for first X PRACH transmissions in the one multi-PRACH transmission on the different ROs, and a reselected second preamble being selected for respective PRACH transmissions following a (X+1)th PRACH transmission; wherein the first preamble is different from the second preamble.

15. The method according to claim 1, wherein during the respective PRACH transmissions in the multi-PRACH transmission, different preambles being selected for the respective PRACH transmissions comprises:
in response to one multi-PRACH transmission being transmitted on different ROs at a same time domain position, reselected preambles being correspondingly selected for the respective PRACH transmissions in the one multi-PRACH transmission on the different ROs.

16. The method according to claim 1, wherein during the respective PRACH transmissions in the multi-PRACH transmission, different preambles being selected for the respective PRACH transmissions comprises at least one of:
in response to one multi-PRACH transmission being transmitted on different ROs at a first time domain position of a same SSB, the same preamble being selected for the respective PRACH transmissions in the one multi-PRACH transmission on the different ROs; or
in response to switching one multi-PRACH transmission from being transmitted on different ROs at a first time domain position of the same SSB to being transmitted on different ROs at a second time domain position of the same SSB, reselected preambles being selected correspondingly for the respective PRACH transmissions in the one multi-PRACH transmission on the different ROs at the second time domain position.

17. The method according to claim 1, further comprising:
receiving third indication information sent by a network device, wherein the third indication information indicates whether preambles to be selected for respective PRACH transmissions at one time domain position in the multi-PRACH transmission is allowed to be different.

18. The method according to claim 1, further comprising:
during the respective PRACH transmissions in one multi-PRACH transmission, selecting a first-time preamble to be selected for the respective PRACH transmissions, from a preamble Group A and/or a preamble Group B.

19. The method according to claim 18, wherein selecting the first-time preamble to be selected for the respective PRACH transmissions, from the preamble Group A and/or the preamble Group B comprises:
in response to an RACH configuration of the multi-PRACH transmission comprising a configuration of the Group A only, selecting the first-time preamble from the Group A;
in response to the RACH configuration of the multi-PRACH transmission comprising a configuration of the Group B only, selecting the first-time preamble from the Group B;
in response to the RACH configuration of the multi-PRACH transmission comprising configurations of both the Group A and the Group B, selecting the first-time preamble from the Group A and the Group B;
in response to the RACH configuration of the multi-PRACH transmission comprising the configurations of both the Group A and the Group B, determining whether a size of msg3 meets a threshold ra-Msg3SizeGroupA, and selecting the first-time preamble from the Group A in case of the size of msg3 meeting the threshold, selecting the first-time preamble from the Group B in case of the size of msg3 not meeting the threshold;
in response to the RACH configuration of the multi-PRACH transmission sharing an RO with other RACH configurations, selecting the first-time preamble from the Group A; or
in response to the RACH configuration of the multi-PRACH transmission sharing the RO with other RACH configurations, and the other RACH configurations comprising the configuration of the Group B, determining to select the first-time preamble from the Group B or the Group A according to fourth indication information sent by a network device, wherein the fourth indication information indicates whether the terminal device selects the first-time preamble from the Group B.

20. The method according to claim 18 or 19, further comprising:
providing a RACH configuration of the multi-PRACH transmission and the other RACH configurations with separate random access channel occasions (separate ROs), wherein an RACH configuration of a separate RO of the multi-PRACH transmission does not comprise a configuration of the Group B.

21. The method according to any one of claims 18-20, further comprising:
obtaining a reselected preamble by reselecting a preamble after selection of the first-time preamble, wherein the reselected preamble is selected from a group where the first-time preamble is, or from a group other than the group where the first-time preamble is.

22. The method according to claim 21, further comprising:
receiving fifth indication information sent by a network device, wherein the fifth indication information is used to determine whether reselection of preamble requires the same group as the selection of the first-time preamble.

23. The method according to claim 22, further comprising:
in response to determining according to the fifth indication information that the reselection of preamble requires the same group as the selection of the first-time preamble, performing the reselection of preamble according to a rule for selecting the group for the first-time preamble.

24. The method according to claim 18, further comprising:
in response to an RACH configuration of the multi-PRACH transmission and other RACH configurations adopting separate ROs, receiving the RACH configuration of the multi-PRACH transmission sent by a network device, wherein the RACH configuration of the multi-PRACH transmission comprises a configuration of the Group B.

25. The method according to claim 18, further comprising:
in response to an RACH configuration of the multi-PRACH transmission sharing an RO with other RACH configurations, receiving the RACH configuration of the multi-PRACH transmission sent by the network device, wherein the RACH configuration of the multi-PRACH transmission comprises a dedicated configuration of the Group B.

26. The method according to claim 24 or 25, wherein a dedicated RACH configuration of the multi-PRACH transmission comprises one or more of:
ra-Msg3SizeGroupA, messagePowerOffsetGroupB, or numberOfRA-PreamblesGroupA.

27. The method according to claim 25, further comprising:
in response to the RACH configuration of the multi-PRACH transmission not comprising dedicated ra-Msg3SizeGroupA, messagePowerOffsetGroupB, or numberOfRA-PreamblesGroupA, receiving the RACH configuration of the multi-PRACH transmission sent by the network device, wherein the RACH configuration of the multi-PRACH transmission is a corresponding configuration in an RACH configuration sharing the RO.

28. The method according to claim 25 or 27, wherein the dedicated configuration of the Group B is a 4-step RA configuration or a 2-step RA configuration.

29. A multi-physical random access channel (PRACH) transmission method, performed by a network device, comprising:
receiving a random access PRACH transmission from a terminal device, wherein the PRACH transmission is at least one PRACH transmission in the multi-PRACH transmission sent by the terminal device; wherein the multi-PRACH transmission comprises a plurality of PRACH transmissions, and preambles to be selected for respective PRACH transmissions are the same or different, the preambles are from a same preamble group or different preamble Groups.

30. The method according to claim 29, further comprising:
in response to determining that the terminal device performing the respective PRACH transmissions in the multi-PRACH transmission, sending first indication information to the terminal device, wherein the first indication information indicates the preambles to be selected for the respective PRACH transmissions in the multi-PRACH transmission.

31. The method according to claim 29, further comprising:
in response to respective PRACH transmissions in the multi-PRACH transmission transmitted on a first RO associated with a first SSB, sending second indication information to the terminal device, wherein the second indication information indicates that preambles to be selected for the respective PRACH transmissions in the multi-PRACH transmission transmitted on the first RO associated with the first SSB are allowed to be different.

32. The method according to claim 29, further comprising:
in response to respective PRACH transmissions at one time domain position in the multi-PRACH transmission, sending third indication information to the terminal device, wherein the third indication information indicates whether preambles to be selected for the respective PRACH transmissions at one time domain position in the multi-PRACH transmission is allowed to be different.

33. The method according to claim 29, further comprising:
in response to an RACH configuration of the multi-PRACH transmission sharing an RO with other RACH configurations, and the other RACH configurations comprising a configuration of a Group B, sending fourth indication information to the terminal device, wherein the fourth indication information indicates whether the terminal device selects a first-time preamble from the Group B.

34. The method according to claim 29, further comprising:
sending fifth indication information to the terminal device, wherein the fifth indication information indicate whether reselection of preamble requires the same preamble group as selection of a first-time preamble.

35. The method according to any one of claims 29-34, further including:
in response to an RACH configuration of the multi-PRACH transmission and other RACH configurations adopting separate ROs, sending the RACH configuration of the multi-PRACH transmission to the terminal device, wherein the RACH configuration of the multi-PRACH transmission comprises a configuration of a Group B.

36. The method according to claim 35, wherein the RACH configuration of the multi-PRACH transmission comprises one or more of:
ra-Msg3SizeGroupA, messagePowerOffsetGroupB, or numberOfRA-PreamblesGroupA.

37. The method according to any one of claims 29-34, further comprising:
in response to an RACH configuration of the multi-PRACH transmission sharing an RO with other RACH configurations, sending the RACH configuration of the multi-PRACH transmission to the terminal device, wherein the RACH configuration of the multi-PRACH transmission comprises a dedicated configuration of a Group B.

38. The method according to claim 37, wherein the dedicated RACH configuration of the multi-PRACH transmission comprises one or more of:
ra-Msg3SizeGroupA, messagePowerOffsetGroupB, or numberOfRA-PreamblesGroupA.

39. The method according to claim 38, further comprising:
in response to the RACH configuration of the multi-PRACH transmission not comprising the dedicated ra-Msg3SizeGroupA, messagePowerOffsetGroupB, or numberOfRA-PreamblesGroupA, sending the RACH configuration of the multi-PRACH transmission to the terminal device, wherein the RACH configuration of the multi-PRACH transmission is a corresponding configuration in an RACH configuration sharing the RO.

40. The method according to claim 37 or 39, wherein the configuration of Group B is a 4-step RA configuration or a 2-step RA configuration.

41. A multi-physical random access channel (PRACH) transmission apparatus, applied to a terminal device, comprising:
a transmission unit, configured to, during respective PRACH transmissions in multi-PRACH transmission, determine preambles to be selected for the respective PRACH transmissions, wherein the preambles are from a same preamble group or different preamble Groups.

42. A multi-physical random access channel (PRACH) transmission apparatus, applied to a network device, comprising:
a receiving unit, configured to receive a random access PRACH transmission from a terminal device, wherein the PRACH transmission is at least one PRACH transmission in the multi-PRACH transmission sent by the terminal device; wherein the multi-PRACH transmission comprises a plurality of PRACH transmissions, and preambles to be selected for respective PRACH transmissions are the same or different, the preambles are from a same preamble group or different preamble groups.

43. A communication device, comprising: a transceiver; a memory; and a processor, respectively connected to the transceiver and the memory, wherein the processor is configured to control wireless signals transceiving of the transceiver by executing computer-executable instructions on the memory, and is capable of implementing the method described in any one of claims 1-28 or the method described in any one of claims 29-40.

44. A computer storage medium, storing computer-executable instructions, wherein, after the computer-executable instructions are executed by a processor, the method described in any one of claims 1-28 or the method described in any one of claims 29-40 is implemented.
